(19) **Europäisches Patentamt**
**European Patent Office**
**Office européen des brevets**

(11) **EP 4 575 573 A1**

(12) **EUROPEAN PATENT APPLICATION**

(43) Date of publication:
25.06.2025 Bulletin 2025/26

(21) Application number: 24219538.6

(22) Date of filing: 12.12.2024

(51) International Patent Classification (IPC):
*G01S 13/42* (2006.01)    *G01S 3/14* (2006.01)
*G01S 13/931* (2020.01)

(52) Cooperative Patent Classification (CPC):
**G01S 13/42; G01S 3/143; G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 US 202318393372**

(71) Applicant: **NXP B.V.**
**5656 AG Eindhoven (NL)**

(72) Inventors:
• **Wu, Ryan Haoyun**
**5656AG Eindhoven (NL)**
• **Li, Jun**
**5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **RADAR SYSTEM AND METHOD THEREFOR**

(57) A radar system includes a plurality of transmit (Tx) antennas and a plurality of receive (Rx) antennas electrically coupled to Tx circuits and Rx circuits and measurement processing circuitry electrically coupled to the Tx circuits and Rx circuits that is configured to produce multiple input, multiple output (MIMO) virtual array measurements on target reflections. Direction processing circuitry is configured to arrange the array measurements into a MIMO matrix is configured to compute a singular-value decomposition (SVD) vectors of the MIMO matrix. Direction processing circuitry is configured to compute direction of arrival (DOA) spectrum and direction of departure (DOD) spectrum. Detection processing circuitry is configured to detect targets from the computed DOA spectrum and DOD spectrum and a data interface configured to output estimated target angle information.

FIG. 1

EP 4 575 573 A1

**Description**

TECHNICAL FIELD

Embodiments of the subject matter described herein relate generally to radar systems.

BACKGROUND

High-resolution direction of arrival and direction of departure estimation is increasingly used in radar systems.
High-resolution automotive radars commonly require super-resolution angle estimation capabilities to image targets that are not separable with natural resolution provided by their Multiple-Input Multiple-Output (MIMO) virtual array apertures. Conventional super-resolution algorithms used in radar systems require uniform arrays for the spatial smoothing processing to be performed on the auto-correlation matrices computed in conventional radar systems as a preprocessing step for the subsequent super-resolution processing. Due to hardware resource constraints, apertures formed by uniform arrays are naturally smaller than sparse arrays, leading to inferior natural resolution. Thus, there is a need for super-resolution processing for radar systems with improved performance.

BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a block diagram of a multiple input, multiple output (MIMO) radar system, according to an embodiment;
FIG. 2 is a diagram of a signal model of a MIMO Matrix of the MIMO radar system of FIG. 1, according to an embodiment;
FIG. 3 is a flow diagram depicting a method, according to an embodiment;
FIG. 4 is a diagram of a signal model and solution principle of a MIMO Matrix Multiple Signal Classification ($M^3$) of the MIMO radar system of FIG. 1, according to an embodiment;
FIGs 5A, 5B, 5C, 5D are simulated results of 2-target MIMO sparse array scenarios, according to an embodiment;
FIGs 6A and 6B are simulated results of 4-target MIMO sparse array scenarios, according to an embodiment;
FIGs 7A, 7B, 7C, and 7D are Tx antenna, Rx antenna, and MIMO virtual antenna X-Z positions of the simulation example of FIGs 6A and 6B;
FIGs 8A, 8B, and 8C are diagrams of sparse array scenarios, according to an embodiment;
FIGs 9A, 9B, 9C, are simulated results of 4-target MIMO sparse array scenarios, according to an embodiment;
FIGs 10A, 10B, 10C, and 10D are simulated results of four target MIMO sparse array scenarios, according to an embodiment;
FIGs 11A, 11B, 11C, and 11D are simulated results of four target MIMO sparse array scenarios, according to an embodiment;
FIGs 12A, 12B, 12C, and 12D are simulated results of two target MIMO sparse array scenarios, according to an embodiment; and
FIGs 13A, 13B, 13C, and 13D are simulated results of two target MIMO sparse array scenarios, according to an embodiment.

SUMMARY

In one aspect, an embodiment of a radar system may include a plurality of transmit (Tx) antennas and a plurality of receive (Rx) antennas, Tx circuits, and Rx circuits, wherein the Tx and Rx circuits are electrically coupled to the Tx and Rx antennas. In an embodiment, measurement processing circuitry may be electrically coupled to the Tx circuits and Rx circuits. The Tx circuits and Rx circuits may be configured to perform multiple input, multiple output (MIMO) virtual array measurements on target reflections produced by the radar system, according to an embodiment. In an embodiment, direction processing circuitry may be configured to arrange the virtual array measurements into a MIMO matrix. In an embodiment, direction processing circuitry may be configured to compute a singular-value decomposition (SVD) vectors of the MIMO matrix. The radar system may also include direction processing circuitry, wherein the direction processing circuitry is configured to compute direction of arrival (DOA) spectrum and direction of departure (DOD) spectrum, according to an embodiment.
In an embodiment, the direction processing circuitry may be configured to compute direction of arrival (DOA) spectrum and direction of departure (DOD) spectrum.

In an embodiment, the plurality of Tx antennas may form a sparse MIMO virtual array geometry and the plurality of Rx antennas may form a sparse MIMO virtual array geometry.

In an embodiment, the direction processing circuitry may be configured to compute a combined DoA and DoD angle spectrum by searching steering vectors or calibrated array angular response vectors that are orthogonal to a noise subspace of DoA and DoD singular vectors.

The plurality of Tx antennas may form a non-uniform array and the plurality of Rx antennas may form a non-uniform array, according to an embodiment.

In an embodiment, the MIMO matrix may be modeled as the sum of a noise matrix and a matrix product that includes a Tx steering vector matrix, a target amplitude matrix, and a Rx steering vector matrix.

According to an embodiment, left singular vectors from a first side of the SVD of the MIMO matrix may indicate Rx or direction of arrival singular vectors, and wherein right singular vectors from a second side of the SVD of the MIMO matrix may indicate Tx or direction of departure singular vectors.

In an embodiment, least significant left singular vectors may be orthogonal to the Rx steering vector, and wherein least significant right singular vectors may be orthogonal to the Tx steering vector.

In an embodiment, least significant left singular vectors may be orthogonal to the Tx steering vector, and wherein least significant right singular vectors may be orthogonal to the Rx steering vector.

In an embodiment, a minimum value of a quantity of the plurality of Tx antennas and a quantity of the plurality of Rx antennas exceeds a quantity of the targets.

In an embodiment, the detection processing circuitry may be configured to detect targets from the computed DOA spectrum and DOD spectrum.

A data interface may be configured to output estimated target angle information, according to an embodiment.

In another aspect, an embodiment may include a method of processing multiple input, multiple output (MIMO) virtual array measurements in a radar system. The method may include obtaining, by the radar system, MIMO virtual array measurements on target reflections, arranging, by array processing circuitry, array measurements into a MIMO matrix, computing, by direction processing circuitry, a singular-value decomposition (SVD) of the MIMO matrix, computing, by direction processing circuitry, direction of arrival (DOA) spectrum and direction of departure (DOD) spectrum, detecting, by detection processing circuitry, targets from computed DOA and DOD spectrum, and outputting an estimated target angle.

In an embodiment of the method, the MIMO matrix may include the sum of a matrix product of a Tx steering vector matrix, a target amplitude matrix, and a Rx steering vector matrix, and a noise matrix.

In an embodiment of the method, computing the DOA and DOD angle spectra may include searching Rx and Tx steering vectors that are orthogonal to a noise subspace of DOA and DOD singular vectors.

In an embodiment of the method, computing, by direction processing circuitry, the DOA spectrum and the DOD spectrum may include using an orthogonality between a target DoA steering vector and a DoA noise subspace, and an orthogonality between a target DoD steering vector and a DoD noise subspace.

In an embodiment of the method, computing the DOA spectrum and DOD spectrum may include evaluating the expression $\arg\max_{\theta,\varphi}\left\{\mathbf{b}_{\theta,\varphi}^{T}\,\mathbf{U}\,\varSigma_{w}\,\mathbf{V}^{H}\,\mathbf{a}_{\theta,\varphi}^{*}\right\}^{-1}$ wherein $\mathbf{b}_{\theta,\varphi}^{T}$ is an Rx steering vector evaluated at elevation angle $\theta$ and azimuth angle $\varphi$, $\mathbf{U}$ is a matrix of least left singular vectors of the MIMO matrix, $\varSigma_{w}$ is a sub matrix having a signal component zeroed and noise components retained, $\mathbf{V}^{H}$ is a conjugate transposed matrix of least right singular vectors of the MIMO matrix, and $\mathbf{a}_{\theta,\varphi}$ is a Tx steering vector evaluated at elevation angle $\theta$ and azimuth angle $\varphi$.

In an embodiment of the method, detecting, by a detection processing circuitry, targets from computed DOA and DOD spectrum, may include using apodization, wherein a plurality of algorithms is used for detecting the targets.

In an embodiment of the method, computing the combined DOA and DOD spectrum may include computing left singular vectors from a first side of the SVD of the MIMO matrix that indicate Rx or direction of arrival singular vectors, and computing right singular vectors from a second side of the SVD of the MIMO matrix that indicate Tx or direction of departure singular vectors.

In an embodiment of the method, least significant left singular vectors may be orthogonal to the Rx steering vector and least significant right singular vectors may be orthogonal to the Tx steering vector.

In an embodiment, the method may include finding left singular vectors from a first side of the SVD of the MIMO matrix that indicate Rx or direction of arrival singular vectors and finding right singular vectors from a second side of the SVD of the MIMO matrix that indicate Tx or direction of departure singular vectors.

DETAILED DESCRIPTION

Super-resolution imaging radar technology is fundamental to the safe and efficient operation of autonomous driving (AD) and higher-level advanced driver assistance systems (ADAS). In these systems, computational and algorithmic enhancements are employed to achieve the required angular resolution superior to the natural resolution provisioned by the physical aperture of the antenna array of the radar system or the Multiple-Input Multiple-Output (MIMO) virtual array apertures.

When applying conventional super-resolution processing to radars, spatial smoothing or Hankel/Toeplitz data matrix construction are necessary to decorrelate the coherent signals so targets are separable in the eigen space of a data matrix generated by the radar system. However, these operations require uniform array geometry so conventional super-resolution processing and associated benefits do not apply to radars employing MIMO sparse array designs. Super-resolution radars and methods that are applicable to MIMO sparse array designs and can manage coherent signals and single snap-shot conditions are desired.

The radar system and method embodiments provided herein may overcome some or all of the aforementioned issues for use in the case of radars with super-resolution processing that exploit the orthogonality between noise and signal subspaces. A radar system employing a new $M^3$ or MIMO Matrix Multiple Signal Classification super-resolution angle estimation processor and method is disclosed. Specifically, in some embodiments, the radar system and method embodiments described herein allow MIMO sparse array designs and can handle coherent signals and single snapshot conditions. The $M^3$ super-resolution angle estimation processor allows super-resolution processing for arbitrary MIMO sparse array designs, according to an embodiment. In an embodiment, the MIMO Matrix (MM) is formed directly from the MIMO virtual array outputs. The formation of MM allows direct separation of targets in decomposed left and right singular vectors, which in turn allows for resolving targets with super resolution by exploiting the orthogonality between the noise subspace and signal subspace of the left/right singular vectors where the signal subspace are spanned by Rx/Tx steering vectors toward targets, according to an embodiment.

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary, or an example is not necessarily to be construed as preferred or advantageous over other implementations. Furthermore, there is no intention to be bound by any expressed or implied theory presented in the preceding technical field, background, or the following detailed description.

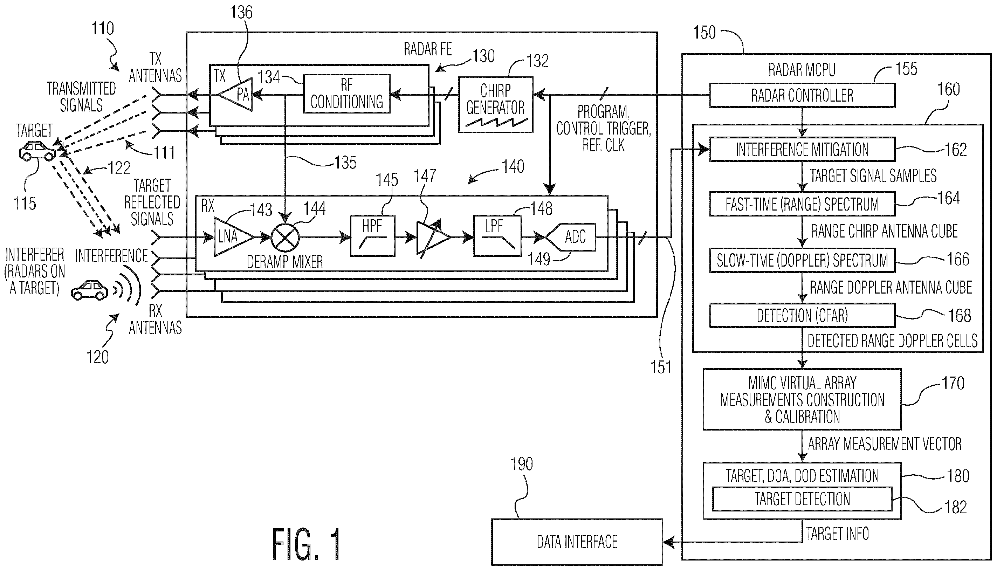

FIG. 1 is a block diagram of a $M^3$ radar system 100 (also referred to herein as "radar system"). In an embodiment, the $M^3$ radar system 100 may include a plurality of transmit (Tx) antennas 110 and a plurality of receive (Rx) antennas 120, Tx circuits 130, and Rx circuits 140, wherein the Tx and Rx circuits 130, 140 are electrically coupled to the Tx and Rx antennas 110, 120. Processing circuitry 150 (also referred to as "$M^3$ super resolution processor" herein) may be couped to the Tx and Rx antennas 110, 120. Processing circuitry 150 includes radar controller 155, measurement circuitry 160, array processor 170 (also referred to herein as "array processing circuitry"), and direction processor 180 (also referred to herein as "direction processing circuitry").

The Tx and Rx circuits 130, 140 may be configured to perform multiple input, multiple output (MIMO) virtual array measurements on target reflections 122 produced by the radar system 100, according to an embodiment. In an embodiment, direction processor 180 may be configured to arrange the array measurements into a MIMO matrix.

Referring again to FIG. 1, in and embodiment, the plurality of Rx and Tx antennas 110, 120 may be formed in arrays having non-uniform and/or random spacing. In an embodiment, the spacing between some or all elements of the plurality of Rx and Tx antennas 110, 120 may exceed a half wavelength of the center frequency of transmitted signals 111 the radar system 100. In an embodiment, the spacing between some or all elements of the plurality of Rx and Tx antennas 110, 120 may exceed a half wavelength of the center frequency of transmitted signals 111 the radar system 100. Moreover, the plurality of Tx antennas 110 and the plurality of Rx antennas 120 may form a sparse MIMO virtual array geometry, according to an embodiment. As used herein, "sparse array" means an antenna array with individual antenna elements placed randomly with an arbitrary number of wavelengths or fractions of wavelengths thereof between each of the antenna elements.

According to an embodiment, Tx and Rx circuits 130, 140 may be electrically coupled to the plurality of Tx and Rx antennas 110, 120. In an embodiment, a chirp generator 132 may produce a train of frequency-chirped pulses wherein the center frequency of each pulse varies in time. The chirp generator 132 may be electrically coupled to RF conditioning circuitry 134 within the Tx circuits 130. The RF conditioning circuitry 134 filters (e.g., band-limits, removes spurious frequency components), imposes phase rotations, and adjusts the input amplitudes of the train of frequency chirped pulses to a power amplifier 136, according to an embodiment. In addition, a local reference signal path 135 may be electrically coupled to the RF conditioning circuitry 134. The RF conditioning circuitry 134 may be electrically coupled to a power amplifier 136 in each of the Tx circuits 130. The power amplifier 136 boosts the power of the signal output by the RF conditioning circuitry 134 to provide sufficient power to transmit transmitted signals 111 to a target 115 such that the target reflected signals 122 have sufficient amplitude to be received by the Rx antennas 120 and to be amplified and detected by the Rx circuits 140.

Each of the Rx circuits 140 may include a low noise amplifier 143, mixer device 144, first filter network 145, intermediate frequency (IF) amplifier 147, second filter network 148, and analog to digital converter (ADC) 149. The low noise amplifier 143 may be electrically coupled to the Rx antennas 120, according to an embodiment. In an embodiment, the low noise amplifier 143 may include a low noise first amplifier stage and may also include additional gain stages to minimize a noise figure and produce sufficient power to provide a sufficiently high signal to noise ratio (SNR) for the Rx circuit 140. The output of the low noise amplifier 143 may be electrically coupled to a mixer device 144, according to an embodiment. In an embodiment, the mixer device 144 may be electrically coupled to local reference signal path 135 and electrically coupled to the RF conditioning circuit 134. The output of the mixer device 144 may be electrically coupled to filter network 145. First filter network 145 may be configured as a high-pass filter configured to remove unwanted portions of the signal spectrum produced by the mixer device 144, according to an embodiment. The output of filter network 145 may be electrically coupled to IF amplifier 147, according to an embodiment. In an embodiment, the gain of IF amplifier 147 may be adjusted to produce a signal level needed for effective acquisition by ADC 149. Second filter network 148 may be electrically coupled to the output of IF amplifier 147, according to an embodiment. In an embodiment, second filter network 148 may be configured as a low pass filter. In an embodiment, the output of second filter network 148 may be electrically coupled to ADC 149. The output of ADC 149 may be electrically coupled to input 151 of processing circuitry 150.

In an embodiment, and as stated previously, processing circuitry 150 may include radar controller 155, measurement processor 160, array processor 170, and direction processor. It should be appreciated that processing circuitry 150 may be realized from components that include, but are not limited to, microprocessors, microcontrollers, field programmable reconfigurable gate arrays (FPGA's), and application-specific integrated circuits (ASIC's). Furthermore, it should be appreciated that each functional block of processing circuitry 150 (e.g., radar controller 155, measurement processor 160, array processor 170, and direction processor 180) may represent distinct functions of the same overall processor unit in an embodiment. In other embodiments, some or all these functional blocks of processing circuitry 150 may include physically separate processing units.

Radar controller 155 may be electrically coupled to chirp generator 132 and to Rx circuitry 140 and may receive control signals from radar controller 155. Radar controller 155 controls the functions of the Tx and Rx circuits 130, 140 as well as measurement processor 160, according to an embodiment.

Measurement processor 160 may be electrically coupled to input 151 of processing circuitry 150 that receives a digitized signal from ADC 149. Measurement processor 160 may include interference mitigation circuitry 162, fast-time (range) and slow-time (doppler) spectrum processing blocks 164, 166, and detection block 168. Detection block 168 may include constant false alarm rate (CFAR) processing.

Array processor 170 may be electrically coupled to measurement processor 160, according to an embodiment. Array processor 170 receives data from the measurement processor 160 and may be used to perform MIMO demultiplexing processing, construct MIMO virtual array measurement vector from the range-doppler data and perform array calibrations.

Direction processor 180 may be electrically coupled to array processor 170, according to an embodiment. In an embodiment, direction processor 180 may be configured to implement a MIMO Matrix Multiple Signal Classification ($M^3$) algorithm to detect targets from computed DOD spectrum and DOA spectrum. In an embodiment, direction processor 180 may receive array measurement vectors from the array processor 170 and may be used to construct a MIMO matrix from an array measurement vector and configured to compute a singular value decomposition (SVD) of a MIMO matrix, and may be configured to construct a DoD noise subspace and a DoA noise subspace based on the least left and right singular vectors and compute a combined DoD and DoA angle spectrum by searching steering vectors or calibrated array angular response vectors that are orthogonal to a noise subspace of DoD and DoA singular vectors. In an embodiment, a detection processor 182 may be configured to detect targets from the computed DOD spectrum and DOA spectrum.

A data interface 190 may be configured to output estimated target angle information, according to an embodiment. Data interface 190 may include various interfaces configured to convert the data received from direction processor 180 to format(s) used elsewhere in the radar system 100 or in an external display, computing device, or processing unit (not shown).

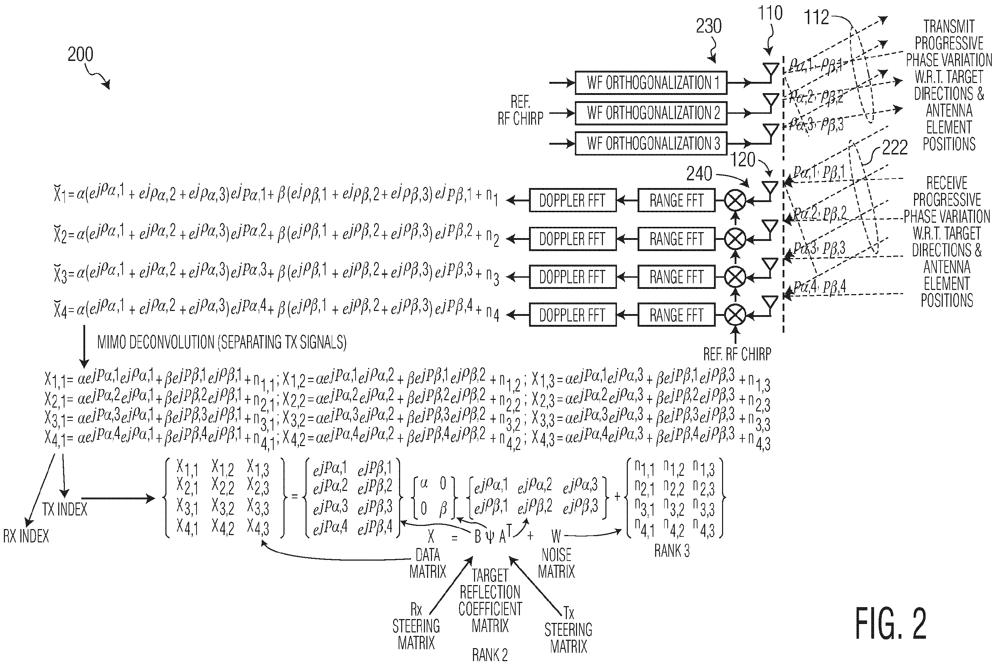

FIG. 2 is a diagram of a signal model 200 of a MIMO Matrix of the MIMO radar system of FIG. 1, according to an embodiment. The signal model 200 of the MIMO Matrix of an exemplary three transmitter, four receiver (3T4R) MIMO radar system in a two-target scenario is depicted, according to an embodiment. In some embodiments, radar system 100 may be configured so that a minimum value of a quantity of the plurality of Tx antennas and a quantity of the plurality of Rx antennas may exceed a quantity of the targets. In an embodiment, the phase delays of the transmitted radar signal 112 to the two targets (i.e., the departure paths) across the 3 transmitters 230 are $[\rho_{\alpha,1}, \rho_{\alpha,2}, \rho_{\alpha,3}]$ and $[\rho_{\beta,1}, \rho_{\beta,2}, \rho_{\beta,3}]$ respectively. The phase delays of the received reflected radar signal 222 from the two targets (i.e., the arrival paths) across the 4 receivers 240 are $[p_{\alpha,1}, p_{\alpha,2}, p_{\alpha,3}, p_{\alpha,4}]$ and $[p_{\beta,1}, p_{\beta,2}, p_{\beta,3}, p_{\beta,4}]$ respectively.

In an embodiment, at the receivers 240, before MIMO demultiplexing, the signals originated from the transmitters 230 may not be separated yet. The Rx array measurement vector $[\breve{x}_1, \breve{x}_2, \breve{x}_3, \breve{x}_4]^T$ may be modeled using the following equations, where $\alpha$ and $\beta$ are the complex reflective coefficient of the targets and $n_1 ... n_4$ represent measurement noises:

$$\breve{x}_1 = \alpha(e^{j\rho_{\alpha,1}} + e^{j\rho_{\alpha,2}} + e^{j\rho_{\alpha,3}})e^{jp_{\alpha,1}} + \beta(e^{j\rho_{\beta,1}} + e^{j\rho_{\beta,2}} + e^{j\rho_{\beta,3}})e^{jp_{\beta,1}} + n_1$$

$$\breve{x}_2 = \alpha(e^{jp_{\alpha,1}} + e^{jp_{\alpha,2}} + e^{jp_{\alpha,3}})e^{jp_{\alpha,2}} + \beta(e^{jp_{\beta,1}} + e^{jp_{\beta,2}} + e^{jp_{\beta,3}})e^{jp_{\beta,2}} + n_2$$

$$\breve{x}_3 = \alpha(e^{jp_{\alpha,1}} + e^{jp_{\alpha,2}} + e^{jp_{\alpha,3}})e^{jp_{\alpha,3}} + \beta(e^{jp_{\beta,1}} + e^{jp_{\beta,2}} + e^{jp_{\beta,3}})e^{jp_{\beta,3}} + n_3$$

$$\breve{x}_4 = \alpha(e^{jp_{\alpha,1}} + e^{jp_{\alpha,2}} + e^{jp_{\alpha,3}})e^{jp_{\alpha,4}} + \beta(e^{jp_{\beta,1}} + e^{jp_{\beta,2}} + e^{jp_{\beta,3}})e^{jp_{\beta,4}} + n_4$$

After MIMO demultiplexing by array processor 170, distinct signals from each transmitters may be separated and virtual antenna array measurement vectors with elements of $x_{i,j}$ where $i = 1 \dots 4$ indicating the Rx antenna index and $j = 1 \dots 3$ indicating the Tx antenna index may be modeled using the following equations, where the noise contained in the measurements are represented by $n_{i,j}$ where $i$ and $j$ follow the same convention:

$$x_{1,1} = \alpha e^{jp_{\alpha,1}}e^{jp_{\alpha,1}} + \beta e^{jp_{\beta,1}}e^{jp_{\beta,1}} + n_{1,1}; \; x_{1,2} = \alpha e^{jp_{\alpha,1}}e^{jp_{\alpha,2}} + \beta e^{jp_{\beta,1}}e^{jp_{\beta,2}} + n_{1,2}; \; x_{1,3} = \alpha e^{jp_{\alpha,1}}e^{jp_{\alpha,3}} + \beta e^{jp_{\beta,1}}e^{jp_{\beta,3}} + n_{1,3}$$

$$x_{2,1} = \alpha e^{jp_{\alpha,2}}e^{jp_{\alpha,1}} + \beta e^{jp_{\beta,2}}e^{jp_{\beta,1}} + n_{2,1}; \; x_{2,2} = \alpha e^{jp_{\alpha,2}}e^{jp_{\alpha,2}} + \beta e^{jp_{\beta,2}}e^{jp_{\beta,2}} + n_{2,2}; \; x_{2,3} = \alpha e^{jp_{\alpha,2}}e^{jp_{\alpha,3}} + \beta e^{jp_{\beta,2}}e^{jp_{\beta,3}} + n_{2,3}$$

$$x_{3,1} = \alpha e^{jp_{\alpha,3}}e^{jp_{\alpha,1}} + \beta e^{jp_{\beta,3}}e^{jp_{\beta,1}} + n_{3,1}; \; x_{3,2} = \alpha e^{jp_{\alpha,3}}e^{jp_{\alpha,2}} + \beta e^{jp_{\beta,3}}e^{jp_{\beta,2}} + n_{3,2}; \; x_{3,3} = \alpha e^{jp_{\alpha,3}}e^{jp_{\alpha,3}} + \beta e^{jp_{\beta,3}}e^{jp_{\beta,3}} + n_{3,3}$$

$$x_{4,1} = \alpha e^{jp_{\alpha,4}}e^{jp_{\alpha,1}} + \beta e^{jp_{\beta,4}}e^{jp_{\beta,1}} + n_{4,1}; \; x_{4,2} = \alpha e^{jp_{\alpha,4}}e^{jp_{\alpha,2}} + \beta e^{jp_{\beta,4}}e^{jp_{\beta,2}} + n_{4,2}; \; x_{4,3} = \alpha e^{jp_{\alpha,4}}e^{jp_{\alpha,3}} + \beta e^{jp_{\beta,4}}e^{jp_{\beta,3}} + n_{4,3}$$

In an embodiment, the MIMO matrix may be modeled as the sum of a noise matrix and a matrix product that includes a Tx steering vector matrix, a target amplitude matrix, and a Rx steering vector matrix. Specifically, in an embodiment, **X** may be modeled using following equation:

$$\mathbf{X} = \mathbf{B\Psi A}^T + \mathbf{W}.$$

Here, and in an embodiment, **B** is the Rx antenna array target steering vector whose column corresponds to the Rx array response to the targets, **A** is the Tx antenna array target steering vector whose column corresponds to the Tx array response to the targets, $\Psi$ is the target amplitude matrix whose main diagonals indicates the reflective coefficients of the targets, and **W** is the noise matrix whose elements indicate the MIMO virtual antenna measurement noise. In some embodiments, the roles of **B** being the Rx and **A** being the Tx may be exchanged without losing generality. The $\{i,j\}$-th element of the MIMO Matrix **X** is $x_{i,j}$, according to an embodiment. For the above example of the 2-target, 3T4R scenario, and in an embodiment, the **X** equation may be expressed explicitly as the following:

$$\begin{bmatrix} x_{1,1} & x_{1,2} & x_{1,3} \\ x_{2,1} & x_{2,2} & x_{2,3} \\ x_{3,1} & x_{3,2} & x_{3,3} \\ x_{4,1} & x_{4,2} & x_{4,3} \end{bmatrix} = \begin{bmatrix} e^{jp_{\alpha,1}} & e^{jp_{\beta,1}} \\ e^{jp_{\alpha,2}} & e^{jp_{\beta,2}} \\ e^{jp_{\alpha,3}} & e^{jp_{\beta,3}} \\ e^{jp_{\alpha,4}} & e^{jp_{\beta,4}} \end{bmatrix} \begin{bmatrix} \alpha & 0 \\ 0 & \beta \end{bmatrix} \begin{bmatrix} e^{jp_{\alpha,1}} & e^{jp_{\alpha,2}} & e^{jp_{\alpha,3}} \\ e^{jp_{\beta,1}} & e^{jp_{\beta,2}} & e^{jp_{\beta,3}} \end{bmatrix} + \begin{bmatrix} n_{1,1} & n_{1,2} & n_{1,3} \\ n_{2,1} & n_{2,2} & n_{2,3} \\ n_{3,1} & n_{3,2} & n_{3,3} \\ n_{4,1} & n_{4,2} & n_{4,3} \end{bmatrix}.$$

In an embodiment, least significant left singular vectors may be orthogonal to the Rx steering vector, and wherein least significant right singular vectors are orthogonal to the Tx steering vector. Specifically, and in an example embodiment, there is a target (signal) contribution portion (i.e., $\mathbf{B\Psi A}^T$) which is rank 2 and a noise contribution portion **(W)** which is rank 3. As the result **X** is rank 3 (full rank) and can be decomposed using singular value decomposition (SVD), according to an embodiment. When the power of reflected signal 122 of FIG. 1 is significantly higher than the noise power, the decomposed singular values and vectors may contain two target (signal) components which are the strongest and one noise component which is the weakest, according to an embodiment.

According to an embodiment, left singular vectors from a first side (i.e., left side) of the SVD of the MIMO matrix may indicate Rx or direction of arrival (DoA) singular vectors, and wherein right singular vectors from a second side (i.e., right side) of the SVD of the MIMO matrix may indicate Tx or direction of departure (DoD) singular vectors. Specifically, as illustrated in this two target, 3T4R example, and in an embodiment, the two strongest left singular vectors may be spanned by the targets' Rx array steering vectors and likewise the two strongest right singular vectors may be spanned by the targets' Tx array steering vectors. Consequentially, the weakest left singular vectors may span the DoA noise subspace or the null space of the targets' Rx array steering vectors and likewise the weakest right singular vectors may span the DoD noise subspace or the null space of the targets' Tx array steering vectors, according to an embodiment. As the result, and in an embodiment, any target's Rx steering vector may be orthogonal to the noise subspace of the left singular vectors and any target's Tx steering vector may be orthogonal to the noise subspace of the right singular vectors. Targets angles may be estimated by exploiting this orthogonality, according to an embodiment. In an embodiment, the inner product of the target's Rx steering vector and the noise subspace of the left singular vectors may be approximately zero when a targets DoA is found. Likewise, the inner product of the target's Tx array steering vector and the noise subspace of the right singular vectors may be approximately zero when a target's DoD is found, according to an embodiment.

The embodiments described in the forgoing include linear arrays and involve a 1D angle estimation problem for purposes of illustration. The 1D formulation may be extended to arbitrary 2D MIMO sparse array for solving 2D angle (i.e., azimuth and elevation) problems, without limitation.

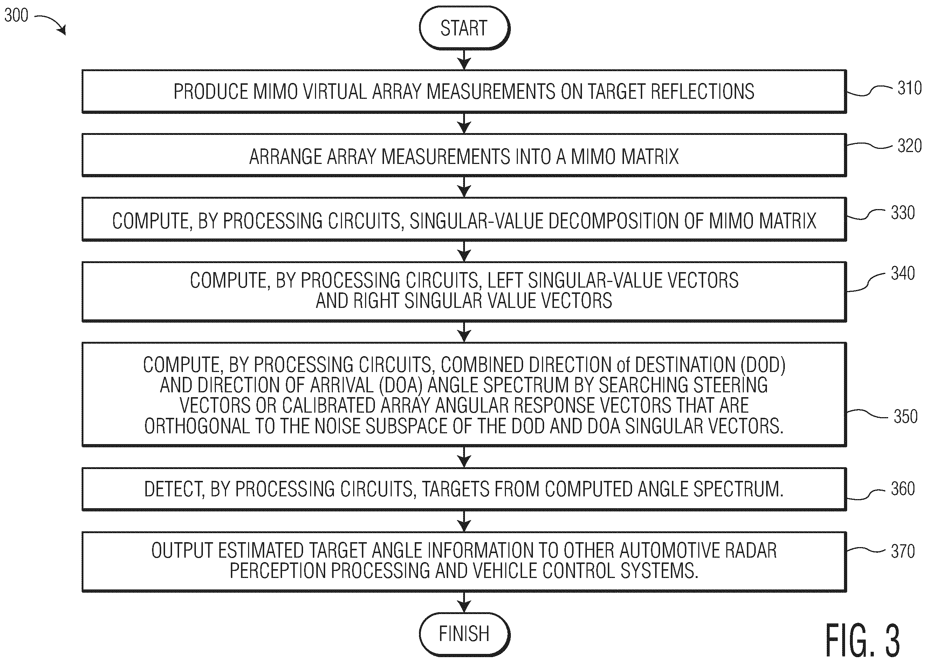

FIG. 3 is a flow diagram depicting a method 300 of processing multiple input, multiple output (MIMO) virtual array measurements in a radar system. The method may be best understood by viewing FIGs 1-3 simultaneously. The formulation described in connection with the method is generalized for arbitrary 2D sparse array and for estimating target azimuth ($\varphi$) and elevation ($\vartheta$) angles, according to an embodiment.

Referring to FIG. 1 and FIG. 3, block 310, the method may include obtaining, by the radar system 100, MIMO virtual array measurements of reflected target signal 122 (i.e., "target reflections").

Referring to FIGs 1-2 and FIG. 3, block 320, the method may include arranging, by direction processor 180, array measurements into a MIMO matrix. In an embodiment of the method, the MIMO matrix may be modeled as the sum of a matrix product of a Tx steering vector matrix, a target amplitude matrix, and a Rx steering vector matrix, and a noise matrix. Specifically, in an embodiment, arranging array measurements into a MIMO matrix using direction processor 180 may include modeling MIMO virtual array measurements in the form $\mathbf{X} = \mathbf{B}\varPsi\mathbf{A}^T + \mathbf{W}$ where $\mathbf{B}$ is the target-angle RX steering vector matrix, $\mathbf{A}$ is the target-angle TX steering vector matrix, $\varPsi$ is the diagonal target amplitude matrix, and $\mathbf{W}$ is the measurement noise matrix. In an embodiment, where an $N_r \times N_t$ matrix $\mathbf{X}$ measuring $q$ targets, it is preferable to have $q < N$ where $N = \min\{N_r, N_t\}$ to allow separable signal and noise subspaces.

Referring to FIGs 1-2 and FIG. 3, block 330, an embodiment of the method may further include computing, by direction processor 180, a singular-value decomposition (SVD) of the MIMO matrix, $\mathbf{X}$, as given by $\mathbf{X} = \mathbf{U}\varSigma\mathbf{V}^H$ where $\mathbf{U}$ is a first orthogonal matrix containing left singular vectors of $\mathbf{X}$ (i.e., "first side of the SVD"), $\mathbf{V}^H$ is a conjugate transpose of a second orthogonal matrix containing right singular vectors of $\mathbf{X}$ (i.e., "second side of the SVD"), and $\varSigma$ is a diagonal matrix of singular values of $\mathbf{X}$.

Referring to FIG. 2 and FIG. 3, block 340, an embodiment of the method may further include computing or finding left singular vectors from the first side of the SVD of the MIMO matrix that indicate Rx or direction of arrival singular vectors, and computing or finding right singular vectors from a second side of the SVD of the MIMO matrix that indicate Tx or direction of departure singular vectors. In an embodiment, least significant left singular vectors may be orthogonal to the Rx steering vector and least significant right singular vectors may be orthogonal to the Tx steering vector. Computing the DoA and DoD angle spectra may include searching for Rx and Tx steering vectors that are orthogonal to a noise subspace of DoA and DoD singular vectors, according to an embodiment. Specifically, and in an embodiment, the least-significant $N_r - q$ left singular vectors $\mathbf{u}$ of $\mathbf{X}$, $\mathbf{u}_i \in \{\mathbf{u}_{q+1}, \mathbf{u}_{q+2}, ..., \mathbf{u}_{Nr}\}$ and $\mathbf{u}_i$ are orthogonal to $\mathbf{B}$, that is $\mathbf{b}_{\vartheta,\varphi}^T \mathbf{u}_{noise} = 0$ where $\mathbf{b}_{\vartheta,\varphi} = [e^{jp(\partial,\varphi)RX1}\ e^{jp(\vartheta,\varphi)RX2} ...\ e^{jp(\vartheta,\varphi)RXN}]^T$ is an RX steering vector corresponding to $\vartheta$ (EL), $\varphi$ (AZ). In an embodiment, the method may also include finding the least-significant $N_t - q$ right singular vectors $v$ of $\mathbf{X}$, $\mathbf{v}_i \in \{\mathbf{v}_{q+1}, \mathbf{v}_{q+2}, ..., \mathbf{v}_{Nt}\}$ and $\mathbf{v}_i^*$ are orthogonal to $\mathbf{A}$, that is $\mathbf{a}_{\vartheta,\varphi}^T \mathbf{v}_{noise} = 0$ where $\mathbf{a}_{\vartheta,\varphi} = [e^{j\rho(\vartheta,\varphi)TX1}\ e^{j\rho(\vartheta,\varphi)TX2} ...\ e^{j\rho(\vartheta,\varphi)TXN}]^T$ is an TX steering vector corresponding to $\vartheta$ (EL), $\varphi$ (AZ).

Referring to FIG. 2 and FIG. 3, block 350, an embodiment of the method may further include, by direction processor 180, determining direction of arrival (DoA) spectrum and direction of departure (DoD) spectrum by searching the SVD of the MIMO matrix for vectors from the group consisting of steering vectors and calibrated array angular response vectors that are orthogonal to a noise subspace of the DOA singular vectors and DOD singular vectors. In an embodiment, consistent DoA-DoD solutions may include:

a.

$$\left(\hat{\theta}, \hat{\varphi}\right) = \arg\max_{\theta,\varphi} \left\{ \sum_{i=L+1}^{N_r} \left\| \mathbf{b}_{\theta,\varphi}^T \cdot \mathbf{u}_i \right\|^{-1} + \sum_{i=L+1}^{N_t} \left\| \mathbf{a}_{\theta,\varphi}^T \cdot \mathbf{v}_i \right\|^{-1} \right\}$$

b.

$$\left(\hat{\theta}, \hat{\varphi}\right) = \arg \min_{\theta,\varphi} \sum_{i=L+1}^{N_r} \left\| \mathbf{b}_{\theta,\varphi}^T \cdot \mathbf{u}_i \right\|^2 + \sum_{i=L+1}^{N_t} \left\| \mathbf{a}_{\theta,\varphi}^T \cdot \mathbf{v}_i \right\|^2 =$$

$$\arg \max_{\theta,\varphi} \left\{ \sum_{i=L+1}^{N_r} \left\| \mathbf{b}_{\theta,\varphi}^T \cdot \mathbf{u}_i \right\|^2 + \sum_{i=L+1}^{N_t} \left\| \mathbf{a}_{\theta,\varphi}^T \cdot \mathbf{v}_i \right\|^2 \right\}^{-1}$$

c.

$$\left(\hat{\theta}, \hat{\varphi}\right) = \arg \min_{\theta,\varphi} \mathbf{b}_{\theta,\varphi}^T \, \mathbf{U} \, \boldsymbol{\Sigma}_w \, \mathbf{V}^H \, \mathbf{a}_{\theta,\varphi}^* = \arg \max_{\theta,\varphi} \left\{ \mathbf{b}_{\theta,\varphi}^T \, \mathbf{U} \, \boldsymbol{\Sigma}_w \, \mathbf{V}^H \, \mathbf{a}_{\theta,\varphi}^* \right\}^{-1}$$

where $\boldsymbol{\Sigma}_w$ is $\boldsymbol{\Sigma}$ with its signal component zeroed (and noise components retained)

d.

$$\left(\hat{\theta}, \hat{\varphi}\right) = \arg \min_{\theta,\varphi} \mathbf{b}_{\theta,\varphi}^T \mathbf{U}_n \boldsymbol{\Sigma}_n \mathbf{V}_n^H \mathbf{a}_{\theta,\varphi}^* = \arg \max_{\theta,\varphi} \left\{ \mathbf{b}_{\theta,\varphi}^T \mathbf{U}_n \boldsymbol{\Sigma}_n \mathbf{V}_n^H \mathbf{a}_{\theta,\varphi}^* \right\}^{-1}$$

where $\boldsymbol{\Sigma}_n$ is the sub-matrix of $\boldsymbol{\Sigma}$ corresponding to its noise components (non-noise main-diagonal elements' columns and rows removed) and $\mathbf{U}_n$ and $\mathbf{V}_n$ are the columns of $\mathbf{U}$ and $\mathbf{V}$ corresponding to their noise components (non-noise columns removed).

Referring to FIGs 1-2 and FIG. 3, block 360, an embodiment of the method may further include detecting, by detection processor 180, targets from computed DOA and DOD spectra.

Referring to FIGs 1-2 and FIG. 3, block 370, an embodiment of the method may include outputting an estimated target angle. In an embodiment, detection processor 180 may transmit target information, e.g., target angle, to data interface 190.

In some embodiments, the main computation burden arises from the singular value decomposition (SVD) of the MIMO Matrix processing step and the grid-based angle spectrum search processing step. In an embodiment of a N-transmitter N-receiver (NTNR) MIMO system, the size of the matrix that may be decomposed using SVD is NxN, so the complexity is roughly N^3 complex multiply-accumulate operations (MACs). For each evaluation of the angle search, N element-to-element multiplication and then a summation may be needed. Assuming K azimuth points and L elevation points, considering Tx and Rx array, the complexity is approximately 2*N*K*L complex MACs. Thus, the complexity is dominated by 2*N*K*L + N^3 for generating an $M^3$ angle spectrum. In some embodiments, computational complexity may be reduced to 4*N*K + N^3 = N*(4K+N^2). Typical K values is in the low hundreds and N value is between 4 to 16. Overall, the computation burden of $M^3$ super-resolution processing may be lower in comparison with other sparse array estimation approaches, according to an embodiment.

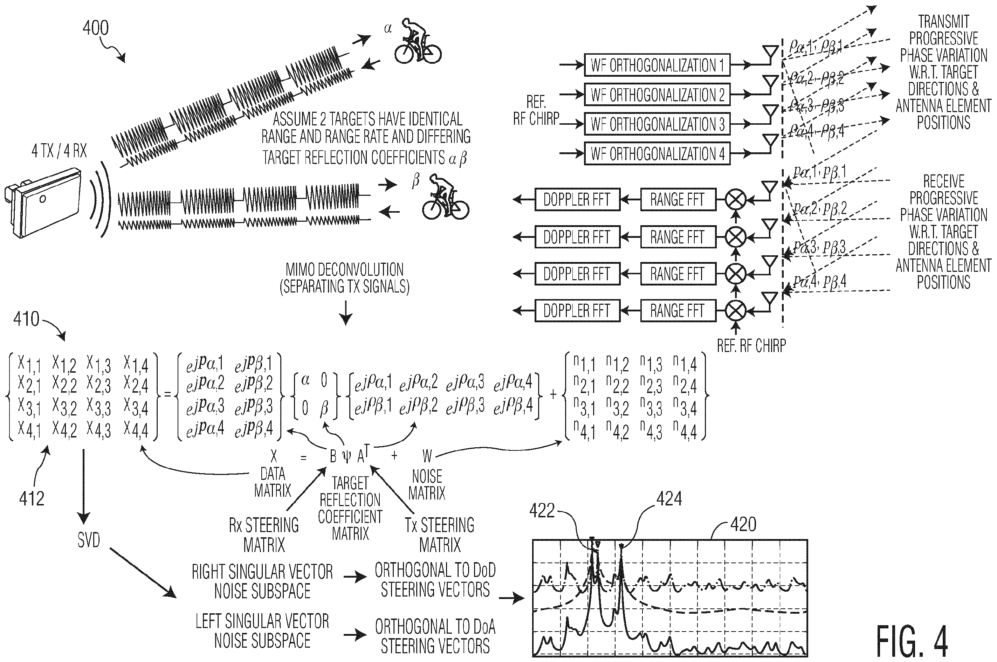

FIG. 4 is a diagram of a signal model 400 and solution principle 410 of a MIMO Matrix Multiple SIgnal Classification ($M^3$) of a 4T4R MIMO radar system, according to an embodiment that illustrates the use of the radar system 100 and method 300 described in connection with FIGs 1-3. In an embodiment, the SVD is performed on the MIMO Matrix 412, and then right and left singular vector noise subspaces are used to correlate with DoA and DoD steering vectors and targets' angles are found by computing angle spectrum 420 and observing the peaks 422, 424 in the angle spectrum 420.

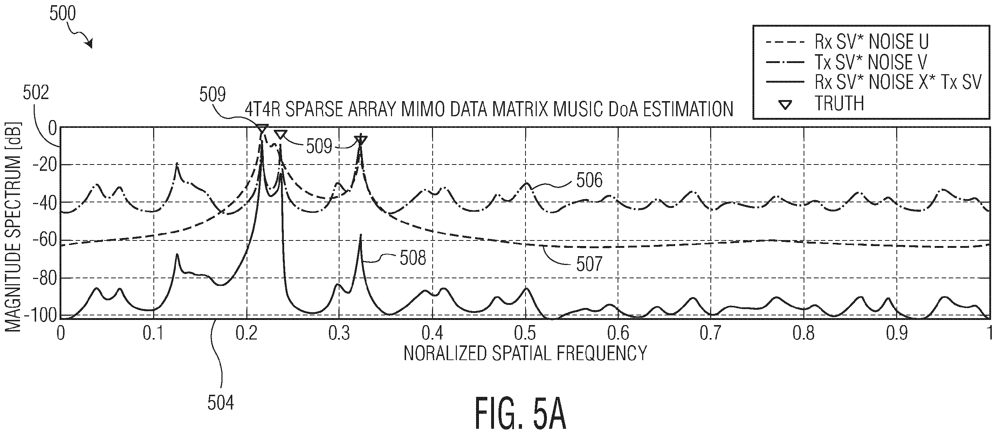

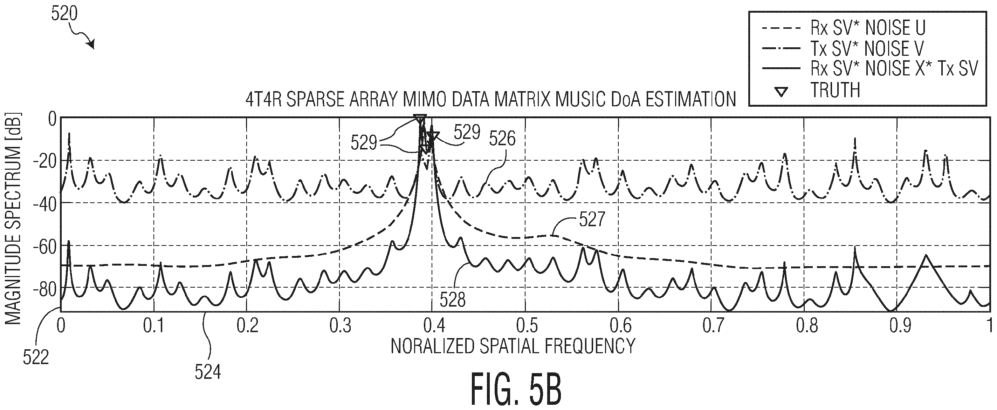

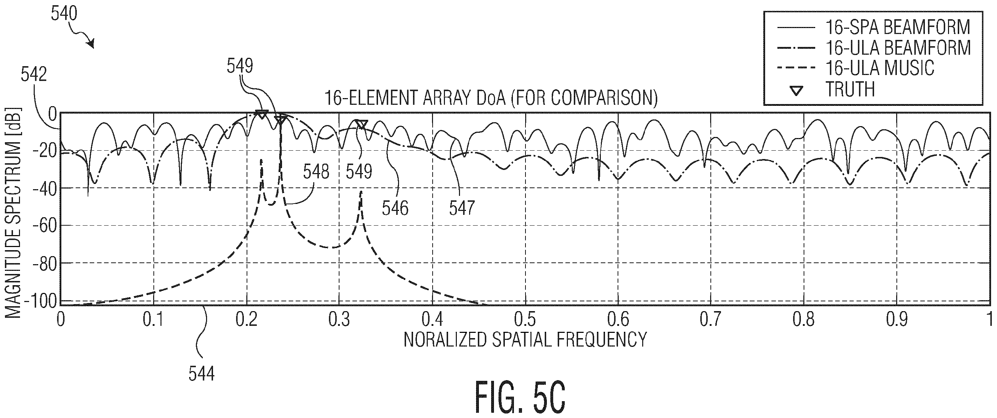

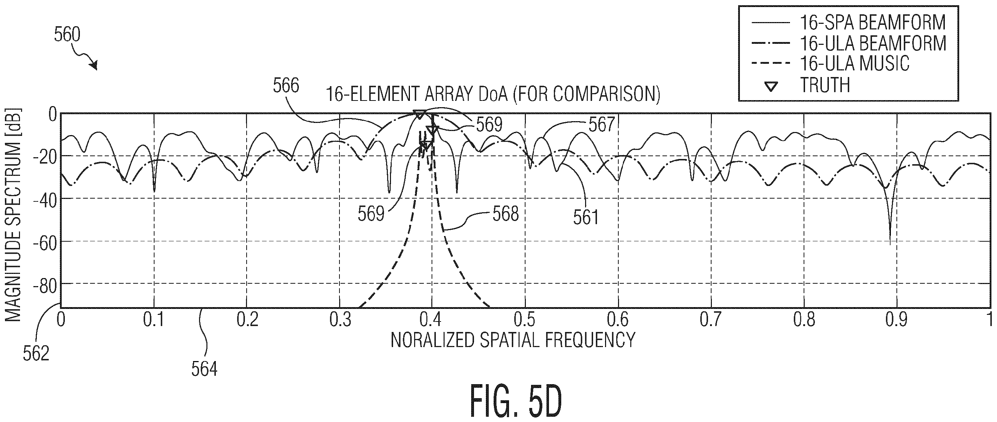

FIGs 5A and 5B and graphs 500, 520 graphically depict simulated results of spectrum magnitude 502, 522 versus normalized spatial frequency 504, 524 for three target MIMO sparse array scenarios and compare the results to simulated results of a 16-element array in FIGs 5C and 5D, and graphs 540 and 560 of spectrum magnitude 542, 562 versus normalized spatial frequency 544, 564, according to an embodiment.

Referring to FIGs 5A and 5B, in an embodiment, a 4T4R sparse MIMO array is simulated to resolve three randomly generated targets in the following two scenarios. In each of the 2 scenarios, criterion

$$\left(\hat{\theta}, \hat{\varphi}\right) = \arg \max_{\theta,\varphi} \left\{ \mathbf{b}_{\theta,\varphi}^T \mathbf{U}_n \boldsymbol{\Sigma}_n \mathbf{V}_n^H \mathbf{a}_{\theta,\varphi}^* \right\}^{-1}$$

is used for generating the angle spectra 508, 528, based on the orthogonality between the DOA steering vectors and the decomposed DOA singular vectors spanning the DOA noise subspace and the orthogonality between the DOD steering vectors and the decomposed DOD singular vectors spanning the DOD noise subspace, according to an embodiment. In an embodiment, traces 506, 526, show the Tx spectrum and traces 507, 527 show Rx angle spectra for each of the two scenarios for comparison. Points 509, 529 show the true target angle and magnitude for reference.

Referring to FIGs 5C, 5D, graphs 540, 560 show magnitude spectrum 542, 562 versus spatial frequency 544, 564. Traces 546 and 566 show results from a 16-element uniform linear array (ULA) and traces 547, 567 show a beamforming result from the 4T4R sparse array. Actual target truth points 549, 569 are shown for reference. The spectra plotted using conventional Multiple SIgnal Classification (MUSIC) algorithm for a 16-element ULA (with forward and backward spatial smoothing) is also plotted in traces 548, 568 for reference. Of note, the $M^3$ angle spectrum of FIGs 5A, 5B traces 508, 528 removes the ambiguity that are prominent in the Tx and Rx angle spectrum and provides higher resolution than ULA beamforming in traces 546, 566, according to an embodiment. In an embodiment, the $M^3$ angle spectrum of traces 508, 528 of FIGs 5A, 5B has comparable performance as traces 548, 568 that employ ULA MUSIC. The advantages of the embodiments described herein manifest themselves in the flexibility of the design of arrays as conventional MUSIC cannot be applied to sparse arrays. In some embodiments, the capability to employ sparse arrays becomes accentuated for the case of two-dimensional (2D) arrays, in particular, 2D quasi-random sparse array using limited number of Tx and Rx elements.

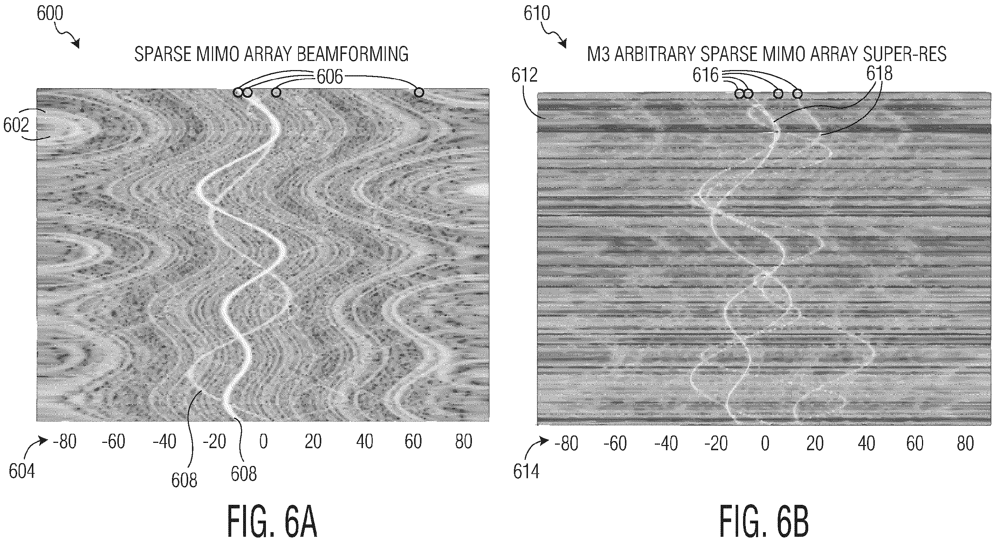

FIGs 6A and 6B depict simulated results and estimated target angle errors of four target MIMO sparse array scenarios, according to an embodiment. To this end, a 6T6R MIMO sparse linear array is simulated to resolve four targets with varying spatial frequencies (angles) as well as distinct amplitudes and random phases, according to an embodiment. FIG. 6A, graph 600 depicts the simulated intensity at progressive time samples 602 versus angle 604 of a sparse array using beamforming only. FIG. 6B, graph 610 depicts the simulated intensity at progressive time samples 612 versus angle 614 of a $M^3$ super resolution radar system. Each horizontal row in FIGs 6A and 6B represent one angle scenario as the targets' angle vary continuously across the instances, starting with true initial locations 606, 616. As seen in FIG. 6A, only two traces 608 are produced using the beamforming approach as the variations in the targets' angles. As seen in FIG. 6B, traces 618 corresponding to all four targets are produced by the variations in the targets' angles, according to an embodiment. The results clearly demonstrate the effectiveness of $M^3$ for reducing target angle ambiguity.

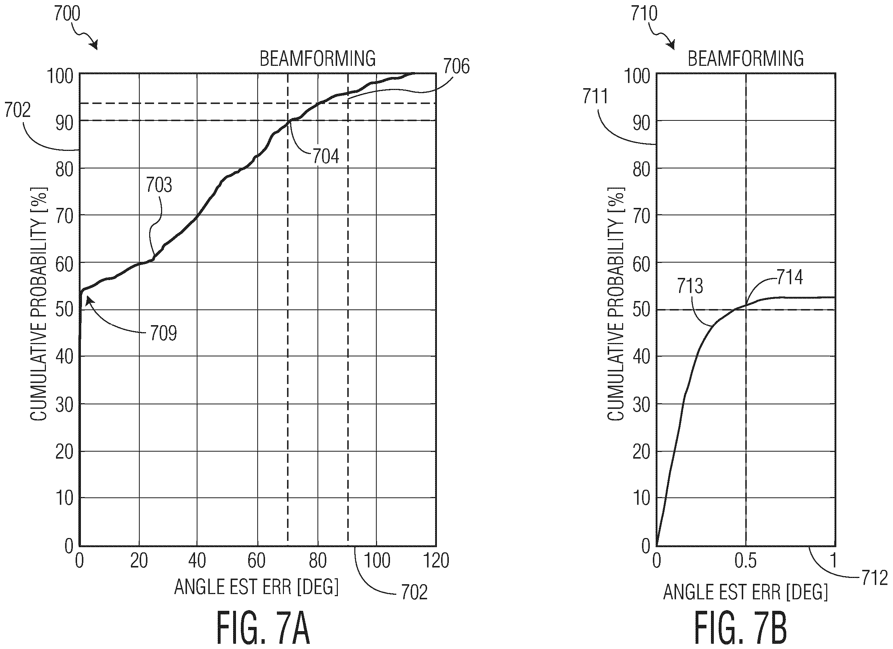

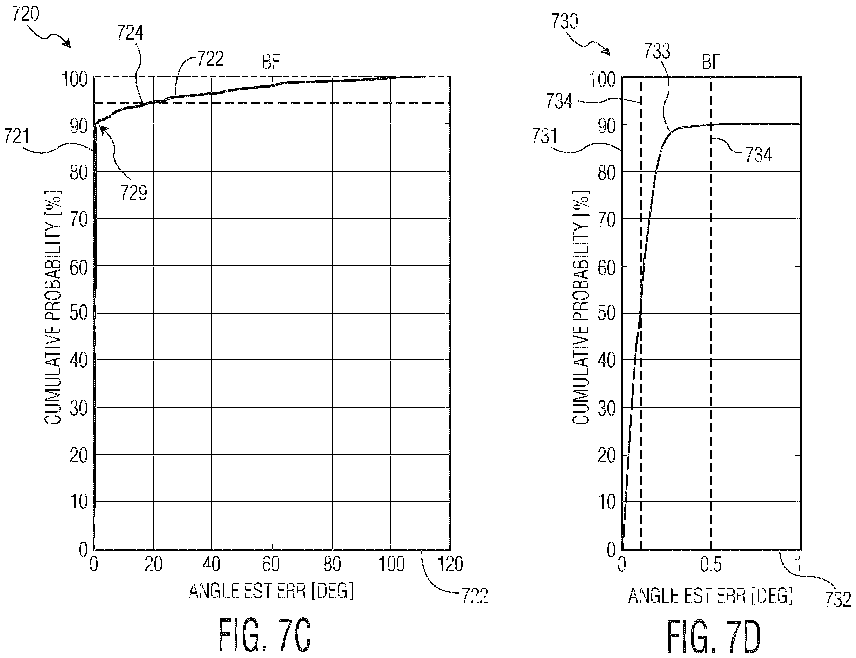

In FIGs 7A, 7B, 7C, and 7D the estimate target angle error (comparing to the truth) from all simulated instances represented in FIGs 6A and 6B and are combined and sorted to form cumulative probability distribution functions (CDF's). FIGs 7A and 7B, graphs 700 and 710 corresponds to the beamforming result of FIG. 6A and FIGs 7C and 7D, graphs 720 and 730 correspond to the $M^3$ super-resolution radar result of FIG. 6B, according to an embodiment. FIG. 7A, graph 700, trace 703 at point 704 shows that the 90-th percentile error of beamformer at point 704 is about 70 degrees. In comparison, FIG. 7D, graph 730, trace 733 at point 734 shows that the 90-th percentile error for the $M^3$ super resolution processor is approximately 0.5 degree. When viewed on the axis range of 0 to 1 degree as in FIG. 7B, trace 713 of graph 710 at point 714 shows the 50-th percentile error of beamformer is approximately 0.4 degrees. Likewise, FIG. 7D, when viewed in zoomed in graph 730 of FIG. 7D showing an axis range of 0 to 1 degrees for trace 733 $M^3$ super resolution processor shows a 50-th percentile error at point 734 of 0.1 degree. The 95-th percentile error of beamformer is about 95 degrees in FIG. 7A, point 706 while $M^3$ is 20 degrees in graph 720, trace 722, point 724. One way to gauge the performance is by observing the first keen point when the error makes a sharp turn from generally very low toward very high. The error can only be lower when all targets are resolved and close to the true positions. When any one target is missed and/or a false target is reported instead, the error increase dramatically. Thus, the knee point is a reasonable indicator of the percentage of instances that all targets are found correctly. The knee point for beamformer-based radar occurs at approximately the 54-th percentile point 709 in FIG. 7A and the knee point for the $M^3$ super resolution radar occurs at 90-th percentile point 729 in FIG. 7C. Intuitively it can be understood that the beamformer-based radar has a 50% chance of catching all four targets, so the mean number of correctly resolvable targets is two (i.e., from 0.5*2). For the $M^3$ super-resolution radar, the mean number of correctly resolvable targets is 3.6 (i.e., from 0.9*4). So, the difference indicates the better performance of the $M^3$ super resolution radar. Given correctly resolved targets, in an embodiment, the $M^3$ super resolution radar also results in lower angle estimation error, as indicated by the vertical position of the knee points.

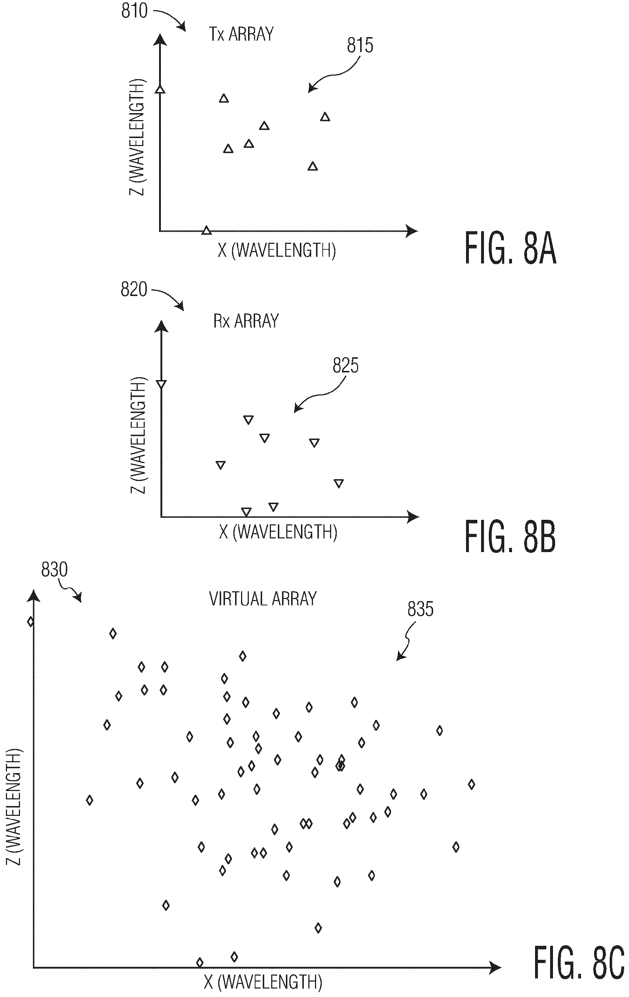

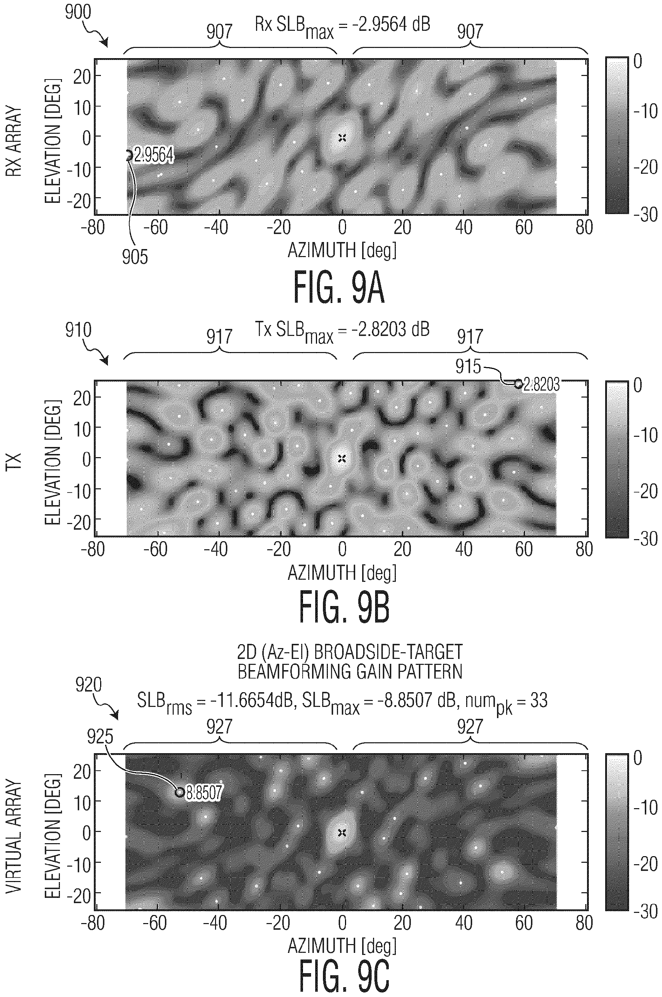

FIGs 8A, 8B, and 8C depict Tx antenna, Rx antenna, and MIMO virtual antenna X-Z positions of a simulation example discussed in connection with FIGs 9A-9C, 10A-10D, 11A-11D, 12A-12D, and 13A-13D. FIGs 8A, 8B, and 8C illustrate, in respective graphs 810, 820, 830, the X-Z positions Tx positions 815, Rx positions 825 of these antenna, and MIMO virtual antenna positions 835. The Tx and Rx antenna positions are provided below:

Tx antenna positions [lambda]:

| X | Z |
|---|---|
| 4.65 | 4.6 |
| 6.8 | 2.8 |
| 3.05 | 3.6 |
| 3.95 | 3.8 |
| 0 | 6.2 |
| 2.85 | 5.8 |

(continued)

| X | Z |
|---|---|
| 2.05 | 0 |
| 7.35 | 5 |

Rx antenna positions [lambda] :

| X | Z |
|---|---|
| 3.8 | 0 |
| 5 | 0.2 |
| 6.8 | 3 |
| 4.6 | 3.2 |
| 0 | 5.6 |
| 7.9 | 1.2 |
| 3.85 | 4 |
| 2.65 | 2 |

FIGs 9A, 9B, and 9C illustrate the antenna gain pattern for Rx array in graph 900, Tx array in graph 910, and full virtual array in graph 920, all in elevation angle and azimuth angle in degrees, according to an embodiment. In all 3 graphs, 900, 910, 920 sidelobe maxima 905, 915, 925 are minimized such that they are as low and other side lobes 907, 917, 927 are approximately even given the desired aperture. In an embodiment, it is preferred to optimize the Tx, Rx, and virtual arrays jointly to result in low sidelobes in all three gain patterns.

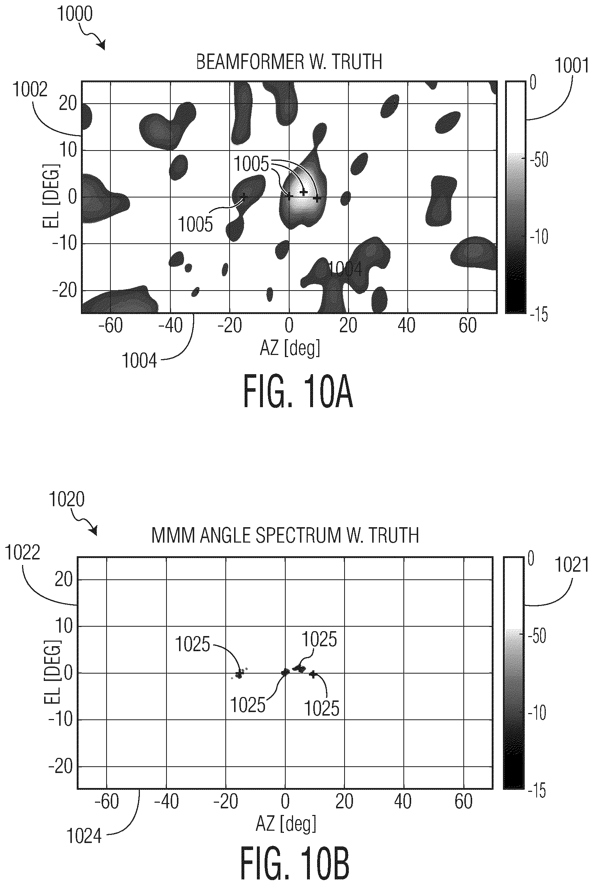

FIGs 10A, 10B, 10C, 10D, 11A, 11B, 11C, 11D, 12A, 12B, 12C, 12D, 13A, 13B, 13C, and 13D are simulated results of 4-target MIMO sparse array scenarios of FIGs 8A, 8B, and 8C according to an embodiment. An 8T8R 2D MIMO sparse array is simulated to resolve targets in the azimuth and elevation domains. Several target examples are simulated, and the results are shown as intensity plots in decibels versus azimuth and elevation in degree in these figures, according to an embodiment.

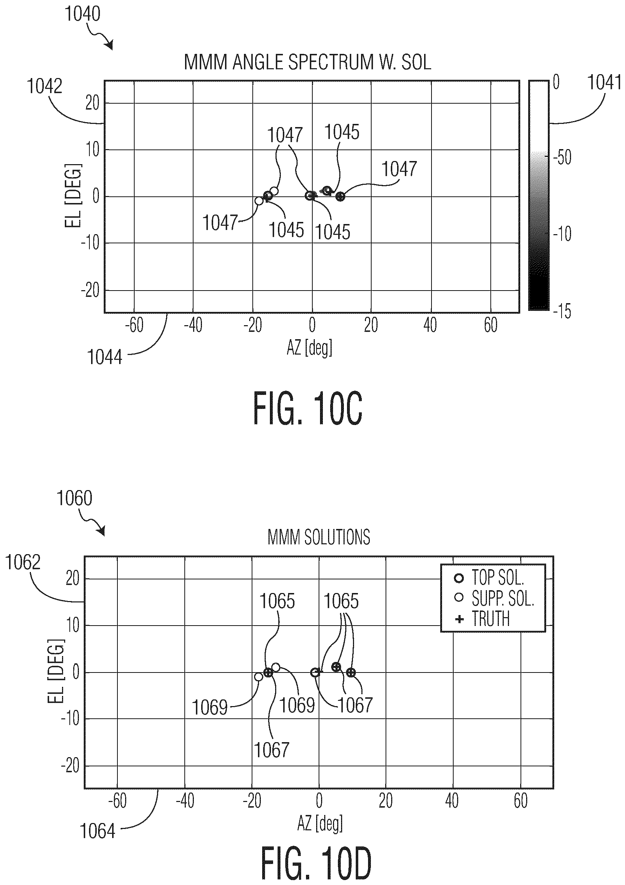

Simulated results of FIGs 10A-10D are generated assuming four targets, a 20 dB minimum signal to noise ratio (SNR) and a target dynamic range (DR) of 10 dB. Under these SNR and DR conditions, FIG 10A, graph 1000, depicts an intensity map 1001 of elevation 1002 versus azimuth 1004 angle spectra for a beamforming-based radar. True target location points 1005 show the true position of four targets. FIG. 10B, graph 1020 depicts an intensity map 1021 of elevation 1022 versus azimuth 1024 angle spectra for a $M^3$ super-resolution radar. True target location points 1025 (shown as crosses) show the true position of four targets. FIG. 10C, graph 1040 depicts an intensity map 1041 of elevation angle 1042 versus azimuth angle 1044. True target locations 1045 shows the true locations and solution locations 1047 show four targets resolved by $M^3$ super-resolution radar in circles. FIG. 10D, graph 1060 depicts $M^3$ super resolution radar target outputs plotted in elevation angle 1062 versus azimuth angle 1064. True target locations 1065 show the true locations and solution locations with the strongest four peaks 1067 and next highest two peaks 1069 using the $M^3$ super-resolution radar, according to an embodiment.

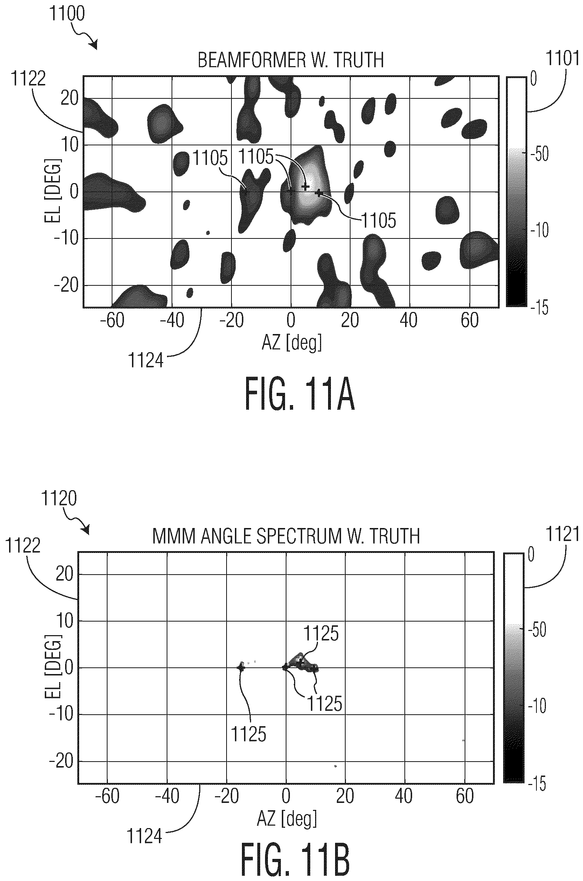

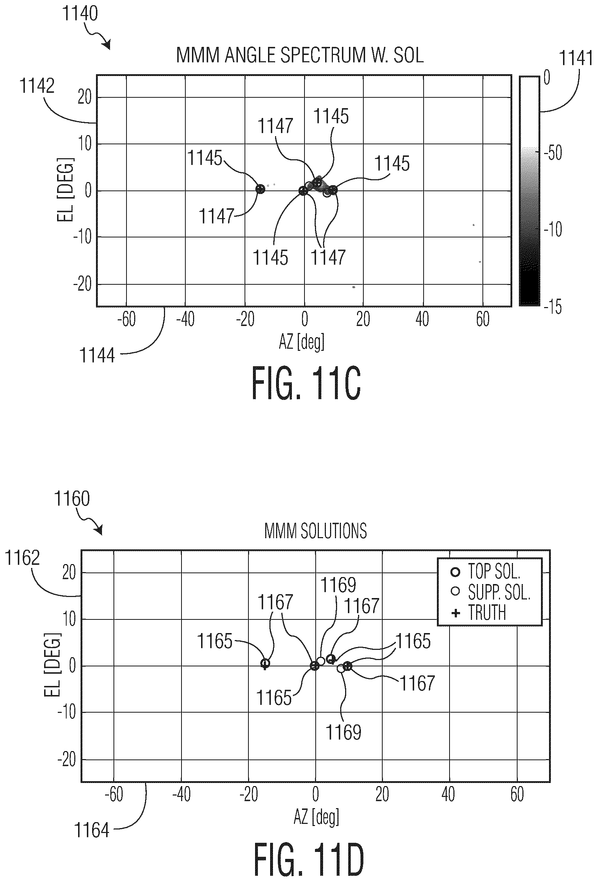

Simulated results of FIGs 11A-11D are generated assuming four targets, a 15 dB minimum SNR, and a target DR of 10 dB. Under these SNR and DR conditions, FIG 11A, graph 1100, depicts an intensity map 1101 of elevation 1102 versus azimuth 1104 angle spectra for a beamforming-based radar. True target location points 1105 show the true position of four targets. FIG. 11B, graph 1120 depicts an intensity map 1121 of elevation 1122 versus azimuth 1124 angle spectra for a $M^3$ super-resolution radar. True target location points 1125 (shown as crosses) show the true position of four targets. FIG. 11C, graph 1140 depicts an intensity map 1141 of elevation angle 1142 versus azimuth angle 1144. True target locations 1145 shows the true locations and solution locations 1147 show four targets resolved by $M^3$ super-resolution radar in circles. FIG. 11D, graph 1160 depicts $M^3$ super resolution radar target outputs plotted in elevation angle 1162 versus azimuth angle 1164. True target locations 1165 show the true locations and solution locations with the strongest four peaks 1167 and next highest two peaks 1169 using the $M^3$ super-resolution radar, according to an embodiment.

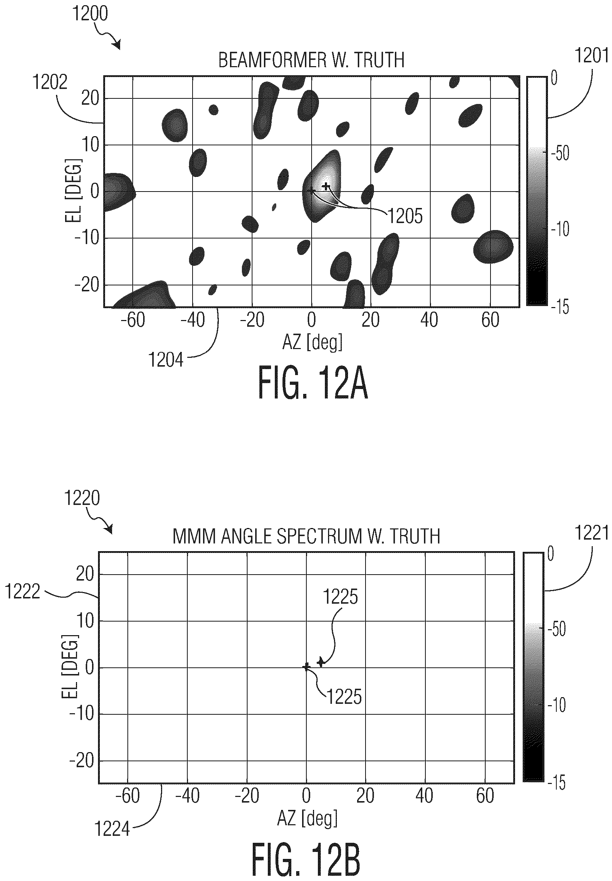

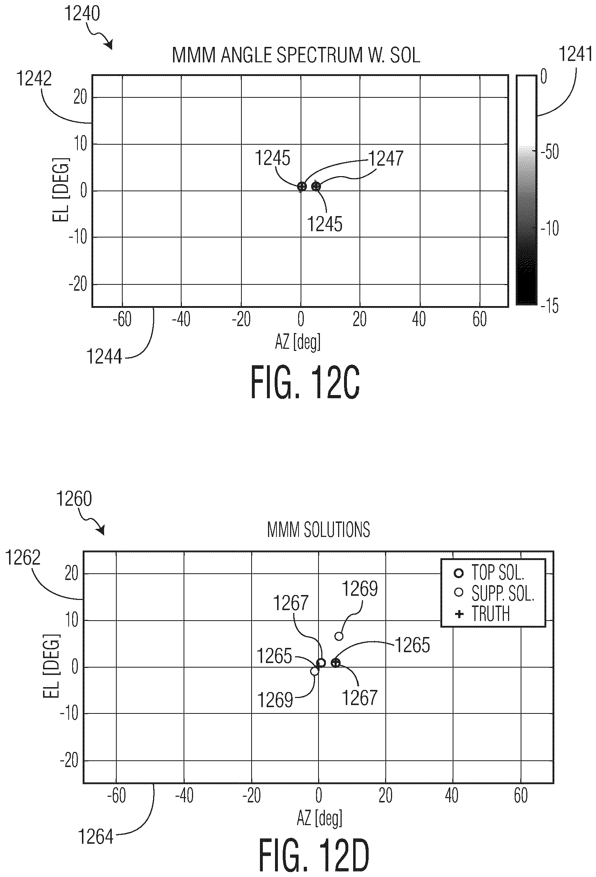

Simulated results of FIGs 12A-12D are generated assuming two targets, a 15 dB minimum SNR, and a target DR of 10 dB. Under these SNR and DR conditions, FIG 12A, graph 1200, depicts an intensity map 1201 of elevation 1202 versus azimuth 1204 angle spectra for a beamforming-based radar. True target location points 1205 show the true position of four targets. FIG. 12B, graph 1220 depicts an intensity map 1221 of elevation 1222 versus azimuth 1224 angle spectra for a $M^3$ super-resolution radar. True target location points 1225 (shown as crosses) show the true position of four targets. FIG. 12C, graph 1240 depicts an intensity map 1241 of elevation angle 1242 versus azimuth angle 1244. True target locations 1245 shows the true locations and solution locations 1247 show four targets resolved by $M^3$ super-resolution radar in circles. FIG. 12D, graph 1260 depicts $M^3$ super resolution radar target outputs plotted in elevation angle 1262 versus azimuth angle 1264. True target locations 1265 show the true locations and solution locations with the strongest four peaks 1267 and next highest two peaks 1269 using the $M^3$ super-resolution radar, according to an embodiment.

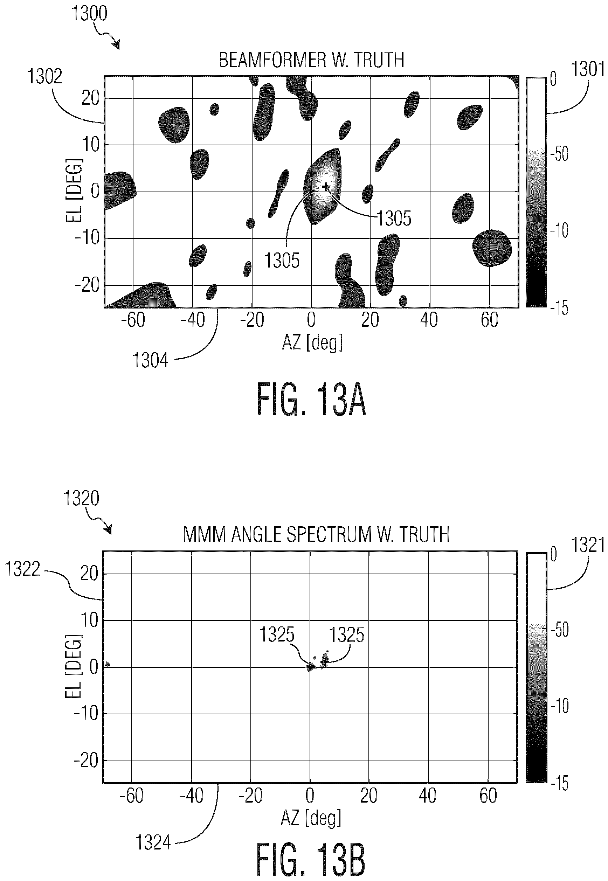

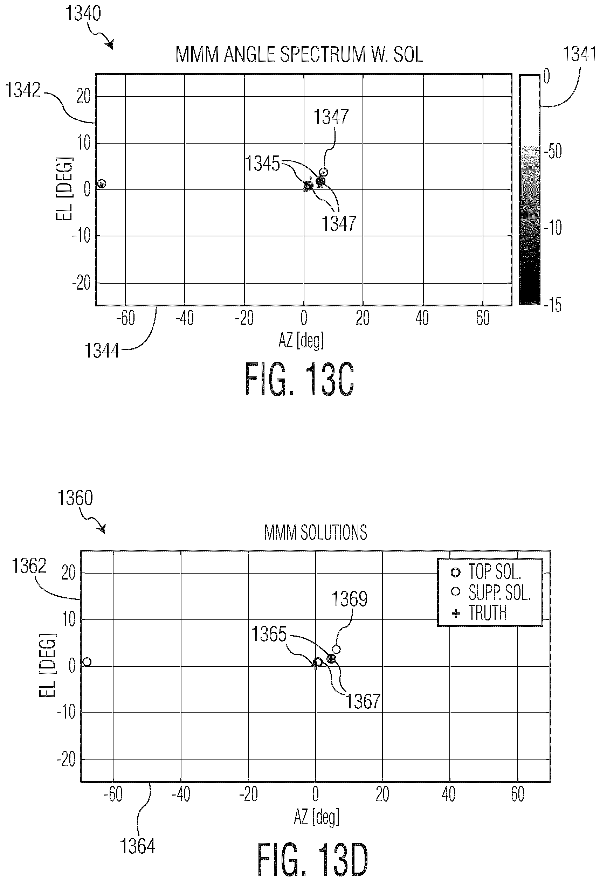

Simulated results of FIGs 13A-13D are generated assuming two targets, a 15 dB minimum SNR, and a target DR of 10 dB. Under these SNR and DR conditions, FIG 13A, graph 1300, depicts an intensity map 1301 of elevation 1302 versus azimuth 1304 angle spectra for a beamforming-based radar. True target location points 1305 show the true position of four targets. FIG. 13B, graph 1320 depicts an intensity map 1321 of elevation 1322 versus azimuth 1324 angle spectra for a $M^3$ super-resolution radar. True target location points 1325 (shown as crosses) show the true position of four targets. FIG. 13C, graph 1340 depicts an intensity map 1341 of elevation angle 1342 versus azimuth angle 1344. True target locations 1345 shows the true locations and solution locations 1347 show four targets resolved by $M^3$ super-resolution radar in circles. FIG. 13D, graph 1360 depicts $M^3$ super resolution radar target outputs plotted in elevation angle 1362 versus azimuth angle 1364. True target locations 1365 show the true locations and solution locations with the strongest four peaks 1367 and next highest two peaks 1369 using the $M^3$ super-resolution radar, according to an embodiment.

The results show that with 4 targets, higher SNR (20dB) may be needed to result in clear separation of the 4 targets. With 2 targets, much lower SNR (10dB) is needed. The results clearly demonstrate the 2D super-resolution angle estimation capability using a true 2D MIMO sparse array with quasi-random pattern in both X(right) and Z(up) dimensions. In an embodiment a full azimuth and elevation search may be conducted within the assumed antenna field of view as in these examples. An intelligent search strategy may be further applied to reduce the search space to speed up the process and further reduce the ambiguity, according to an embodiment. In an embodiment, the search space may be reduced by checking the observed radial velocity of the target against the projected ego velocity (of the radar) onto the direction of the spatial location indicated by the azimuth and elevation steering angles under search and the range of the target. If the observed ego velocity and the projected ego velocity are inconsistent beyond a threshold, the angles under search may be excluded for a stationary object. For moving objects, elevations angles under search that are under ground or higher than a maximum car height, may be excluded.

Without departing from the scope of the inventive subject matter disclosed herein, the spectra of $M^3$ super resolution radar and method can also be used in combination with other angular spectrum estimation algorithms. For example, with multiple angle spectra, apodization or minimum pooling operation can be performed in which the amplitude of each support is determined based on the minimum magnitude of the support from all algorithms, according to an embodiment. In some embodiments, apodization may be effective against spurious targets as they tend to be inconsistent amongst different algorithms' outputs. In an embodiment, a weighted average between two or more spectra may be taken to achieve better performance and may be effective against spurious targets.

For the sake of brevity, certain terminology may also be used herein for the purpose of reference only, and thus are not intended to be limiting, and the terms "first," "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

**Claims**

1. A radar system comprising:

   a plurality of transmit, Tx, antennas and a plurality of receive, Rx, antennas;
   Tx circuits and Rx circuits, wherein the Tx and Rx circuits are electrically coupled to the Tx and Rx antennas;

measurement processing circuitry electrically coupled to the Tx circuits and Rx circuits, wherein the measurement processing circuitry is configured to produce multiple input, multiple output, MIMO, virtual array measurements on target reflections from targets; and

direction processing circuitry, wherein the direction processing circuitry is configured to arrange the virtual array measurements into a MIMO matrix, and wherein the direction processing circuitry is further configured to compute singular-value decomposition, SVD, vectors of the MIMO matrix.

2.  The radar system of claim 1, wherein the direction processing circuitry is configured to compute direction of arrival (DOA) spectrum and direction of departure (DOD) spectrum.

3.  The radar system of claim 2, further comprising detection processing circuitry, wherein the detection processing circuitry is configured to detect targets from the computed DOA spectrum and DOD spectrum.

4.  The radar system of claim 2 or 3, wherein the direction processing circuitry computes a combined DoA and DoD angle spectrum by searching steering vectors or calibrated array angular response vectors that are orthogonal to a noise subspace of DoA and DoD singular vectors.

5.  The radar system of any preceding claim, wherein the plurality of Tx antennas forms a sparse MIMO virtual array geometry, and the plurality of Rx antennas forms a sparse MIMO virtual array geometry.

6.  The radar system of any preceding claim, wherein the plurality of Tx antennas forms a non-uniform array and the plurality of Rx antennas forms a non-uniform array.

7.  The radar system of any preceding claim, wherein the MIMO matrix is modeled as a sum of:

    a matrix product of a Tx steering vector matrix, a target amplitude matrix, and a Rx steering vector matrix; and
    a noise matrix.

8.  The radar system of claim 7, wherein least significant left singular vectors are orthogonal to the Rx steering vectors, and wherein least significant right singular vectors are orthogonal to the Tx steering vector.

9.  The radar system of claim 7, wherein least significant left singular vectors are orthogonal to the Tx steering vectors, and wherein least significant right singular vectors are orthogonal to the Rx steering vector.

10. The radar system of any preceding claim, wherein left singular vectors from a first side of the SVD of the MIMO matrix indicate Rx or direction of arrival singular vectors, and wherein right singular vectors from a second side of the SVD of the MIMO matrix indicate Tx or direction of departure singular vectors.

11. The radar system of any preceding claim, wherein a minimum value of a quantity of the plurality of Tx antennas and a quantity of the plurality of Rx antennas exceeds a quantity of the targets.

12. The radar system of any preceding claim, further comprising a data interface configured to output estimated target angle information.

13. A method of processing multiple input, multiple output, MIMO, virtual array measurements in a radar system, the method comprising the steps of:

    obtaining, by the radar system, MIMO virtual array measurements on target reflections;
    arranging, by direction processing circuitry, array measurements into a MIMO matrix;
    computing, by the direction processing circuitry, a singular-value decomposition, SVD, of the MIMO matrix;
    computing, by a direction processing circuitry, direction of destination, DOD, spectrum and direction of arrival (DOA) spectrum;
    detecting, by a detection processing circuitry, targets from computed DOD and DOA spectrum; and
    outputting an estimated target angle.

14. The method of claim 13, wherein the MIMO matrix has a physical meaning and is modeled as a sum of:

    a matrix product of a Tx steering vector matrix, a target amplitude matrix, and a Rx steering vector matrix; and

a noise matrix.

15. The method of claim 13 or 14, wherein computing the DoD spectrum and the DoA spectrum includes searching the SVD of the MIMO matrix for Rx and Tx steering vectors that are orthogonal to a noise subspace of DoD and DoA singular vectors.

FIG. 1

200

230

110  112

TRANSMIT PROGRESSIVE PHASE VARIATION W.R.T. TARGET DIRECTIONS & ANTENNA ELEMENT POSITIONS

REF. RF CHIRP → WF ORTHOGONALIZATION 1
REF. RF CHIRP → WF ORTHOGONALIZATION 2
WF ORTHOGONALIZATION 3

$p_{\alpha,1} \cdot p_{\beta,1}$
$p_{\alpha,2} \cdot p_{\beta,2}$
$p_{\alpha,3} \cdot p_{\beta,3}$

240  120

222

$p_{\alpha,1}, p_{\beta,1}$

RECEIVE PROGRESSIVE PHASE VARIATION W.R.T. TARGET DIRECTIONS & ANTENNA ELEMENT POSITIONS

$\breve{X}_1 = \alpha(e^{j\rho_{\alpha},1} + e^{j\rho_{\alpha},2} + e^{j\rho_{\alpha},3})e^{jp_{\alpha},1} + \beta(e^{j\rho_{\beta},1} + e^{j\rho_{\beta},2} + e^{j\rho_{\beta},3})e^{jp_{\beta},1} + n_1$ ← DOPPLER FFT ← RANGE FFT ⊗

$\breve{X}_2 = \alpha(e^{j\rho_{\alpha},1} + e^{j\rho_{\alpha},2} + e^{j\rho_{\alpha},3})e^{jp_{\alpha},2} + \beta(e^{j\rho_{\beta},1} + e^{j\rho_{\beta},2} + e^{j\rho_{\beta},3})e^{jp_{\beta},2} + n_2$ ← DOPPLER FFT ← RANGE FFT ⊗

$p_{\alpha,2}, p_{\beta,2}$

$\breve{X}_3 = \alpha(e^{j\rho_{\alpha},1} + e^{j\rho_{\alpha},2} + e^{j\rho_{\alpha},3})e^{jp_{\alpha},3} + \beta(e^{j\rho_{\beta},1} + e^{j\rho_{\beta},2} + e^{j\rho_{\beta},3})e^{jp_{\beta},3} + n_3$ ← DOPPLER FFT ← RANGE FFT ⊗

$p_{\alpha,3}, p_{\beta,3}$

$\breve{X}_4 = \alpha(e^{j\rho_{\alpha},1} + e^{j\rho_{\alpha},2} + e^{j\rho_{\alpha},3})e^{jp_{\alpha},4} + \beta(e^{j\rho_{\beta},1} + e^{j\rho_{\beta},2} + e^{j\rho_{\beta},3})e^{jp_{\beta},4} + n_4$ ← DOPPLER FFT ← RANGE FFT ⊗

$p_{\alpha,4}, p_{\beta,4}$

REF. RF CHIRP

↓ MIMO DECONVOLUTION (SEPARATING TX SIGNALS)

$X_{1,1} = \alpha e^{jp_{\alpha},1}e^{j\rho_{\alpha},1} + \beta e^{jp_{\beta},1}e^{j\rho_{\beta},1} + n_{1,1}$; $X_{1,2} = \alpha e^{jp_{\alpha},1}e^{j\rho_{\alpha},2} + \beta e^{jp_{\beta},1}e^{j\rho_{\beta},2} + n_{1,2}$; $X_{1,3} = \alpha e^{jp_{\alpha},1}e^{j\rho_{\alpha},3} + \beta e^{jp_{\beta},1}e^{j\rho_{\beta},3} + n_{1,3}$

$X_{2,1} = \alpha e^{jp_{\alpha},2}e^{j\rho_{\alpha},1} + \beta e^{jp_{\beta},2}e^{j\rho_{\beta},1} + n_{2,1}$; $X_{2,2} = \alpha e^{jp_{\alpha},2}e^{j\rho_{\alpha},2} + \beta e^{jp_{\beta},2}e^{j\rho_{\beta},2} + n_{2,2}$; $X_{2,3} = \alpha e^{jp_{\alpha},2}e^{j\rho_{\alpha},3} + \beta e^{jp_{\beta},2}e^{j\rho_{\beta},3} + n_{2,3}$

$X_{3,1} = \alpha e^{jp_{\alpha},3}e^{j\rho_{\alpha},1} + \beta e^{jp_{\beta},3}e^{j\rho_{\beta},1} + n_{3,1}$; $X_{3,2} = \alpha e^{jp_{\alpha},3}e^{j\rho_{\alpha},2} + \beta e^{jp_{\beta},3}e^{j\rho_{\beta},2} + n_{3,2}$; $X_{3,3} = \alpha e^{jp_{\alpha},3}e^{j\rho_{\alpha},3} + \beta e^{jp_{\beta},3}e^{j\rho_{\beta},3} + n_{3,3}$

$X_{4,1} = \alpha e^{jp_{\alpha},4}e^{j\rho_{\alpha},1} + \beta e^{jp_{\beta},4}e^{j\rho_{\beta},1} + n_{4,1}$; $X_{4,2} = \alpha e^{jp_{\alpha},4}e^{j\rho_{\alpha},2} + \beta e^{jp_{\beta},4}e^{j\rho_{\beta},2} + n_{4,2}$; $X_{4,3} = \alpha e^{jp_{\alpha},4}e^{j\rho_{\alpha},3} + \beta e^{jp_{\beta},4}e^{j\rho_{\beta},3} + n_{4,3}$

TX INDEX

RX INDEX

$$\begin{Bmatrix} X_{1,1} & X_{1,2} & X_{1,3} \\ X_{2,1} & X_{2,2} & X_{2,3} \\ X_{3,1} & X_{3,2} & X_{3,3} \\ X_{4,1} & X_{4,2} & X_{4,3} \end{Bmatrix} = \begin{bmatrix} e^{jp_{\alpha},1} & e^{jp_{\beta},1} \\ e^{jp_{\alpha},2} & e^{jp_{\beta},2} \\ e^{jp_{\alpha},3} & e^{jp_{\beta},3} \\ e^{jp_{\alpha},4} & e^{jp_{\beta},4} \end{bmatrix} \begin{bmatrix} \alpha & 0 \\ 0 & \beta \end{bmatrix} \begin{bmatrix} e^{j\rho_{\alpha},1} & e^{j\rho_{\alpha},2} & e^{j\rho_{\alpha},3} \\ e^{j\rho_{\beta},1} & e^{j\rho_{\beta},2} & e^{j\rho_{\beta},3} \end{bmatrix} + \begin{bmatrix} n_{1,1} & n_{1,2} & n_{1,3} \\ n_{2,1} & n_{2,2} & n_{2,3} \\ n_{3,1} & n_{3,2} & n_{3,3} \\ n_{4,1} & n_{4,2} & n_{4,3} \end{bmatrix}$$

$X$ = $B$ $\psi$ $A^T$ + $W$

RANK 3

DATA MATRIX

NOISE MATRIX

Rx STEERING MATRIX

TARGET REFLECTION COEFFICIENT MATRIX

Tx STEERING MATRIX

RANK 2

FIG. 2

EP 4 575 573 A1

300

```
                          ┌─────────┐
                          │  START  │
                          └────┬────┘
                               ▼
┌──────────────────────────────────────────────────────────────────┐
│     PRODUCE MIMO VIRTUAL ARRAY MEASUREMENTS ON TARGET REFLECTIONS  │ ─ 310
└──────────────────────────────────────┬───────────────────────────┘
                                        ▼
┌──────────────────────────────────────────────────────────────────┐
│          ARRANGE ARRAY MEASUREMENTS INTO A MIMO MATRIX            │ ─ 320
└──────────────────────────────────────┬───────────────────────────┘
                                        ▼
┌──────────────────────────────────────────────────────────────────┐
│  COMPUTE, BY PROCESSING CIRCUITS, SINGULAR-VALUE DECOMPOSITION     │ ─ 330
│                       OF MIMO MATRIX                               │
└──────────────────────────────────────┬───────────────────────────┘
                                        ▼
┌──────────────────────────────────────────────────────────────────┐
│    COMPUTE, BY PROCESSING CIRCUITS, LEFT SINGULAR-VALUE VECTORS    │ ─ 340
│               AND RIGHT SINGULAR VALUE VECTORS                     │
└──────────────────────────────────────┬───────────────────────────┘
                                        ▼
┌──────────────────────────────────────────────────────────────────┐
│ COMPUTE, BY PROCESSING CIRCUITS, COMBINED DIRECTION of DESTINATION │
│ (DOD) AND DIRECTION OF ARRIVAL (DOA) ANGLE SPECTRUM BY SEARCHING   │
│ STEERING VECTORS OR CALIBRATED ARRAY ANGULAR RESPONSE VECTORS      │ ─ 350
│ THAT ARE ORTHOGONAL TO THE NOISE SUBSPACE OF THE DOD AND DOA       │
│ SINGULAR VECTORS.                                                  │
└──────────────────────────────────────┬───────────────────────────┘
                                        ▼
┌──────────────────────────────────────────────────────────────────┐
│ DETECT, BY PROCESSING CIRCUITS, TARGETS FROM COMPUTED ANGLE        │ ─ 360
│ SPECTRUM.                                                          │
└──────────────────────────────────────┬───────────────────────────┘
                                        ▼
┌──────────────────────────────────────────────────────────────────┐
│ OUTPUT ESTIMATED TARGET ANGLE INFORMATION TO OTHER AUTOMOTIVE      │ ─ 370
│ RADAR PERCEPTION PROCESSING AND VEHICLE CONTROL SYSTEMS.           │
└──────────────────────────────────────┬───────────────────────────┘
                                        ▼
                                  ┌─────────┐
                                  │ FINISH  │
                                  └─────────┘
```

FIG. 3

400

4 TX / 4 RX

$\alpha$

$\beta$

ASSUME 2 TARGETS HAVE IDENTICAL RANGE AND RANGE RATE AND DIFFERING TARGET REFLECTION COEFFICIENTS $\alpha\ \beta$

MIMO DECONVOLUTION (SEPARATING TX SIGNALS)

WF ORTHOGONALIZATION 1
WF ORTHOGONALIZATION 2
WF ORTHOGONALIZATION 3
WF ORTHOGONALIZATION 4

REF. RF CHIRP

TRANSMIT PROGRESSIVE PHASE VARIATION W.R.T. TARGET DIRECTIONS & ANTENNA ELEMENT POSITIONS

$p_{\alpha,1}, p_{\beta,1}$
$p_{\alpha,2}, p_{\beta,2}$
$p_{\alpha,3}, p_{\beta,3}$
$p_{\alpha,4}, p_{\beta,4}$

DOPPLER FFT ← RANGE FFT
DOPPLER FFT ← RANGE FFT
DOPPLER FFT ← RANGE FFT
DOPPLER FFT ← RANGE FFT

RECEIVE PROGRESSIVE PHASE VARIATION W.R.T. TARGET DIRECTIONS & ANTENNA ELEMENT POSITIONS

$p_{\alpha,1}, p_{\beta,1}$
$p_{\alpha,2}, p_{\beta,2}$
$p_{\alpha,3}, p_{\beta,3}$
$p_{\alpha,4}, p_{\beta,4}$

REF. RF CHIRP

410

$$
\begin{bmatrix} X_{1,1} & X_{1,2} & X_{1,3} & X_{1,4} \\ X_{2,1} & X_{2,2} & X_{2,3} & X_{2,4} \\ X_{3,1} & X_{3,2} & X_{3,3} & X_{3,4} \\ X_{4,1} & X_{4,2} & X_{4,3} & X_{4,4} \end{bmatrix} = \begin{bmatrix} e^{jp_{\alpha,1}} & e^{jp_{\beta,1}} \\ e^{jp_{\alpha,2}} & e^{jp_{\beta,2}} \\ e^{jp_{\alpha,3}} & e^{jp_{\beta,3}} \\ e^{jp_{\alpha,4}} & e^{jp_{\beta,4}} \end{bmatrix} \begin{bmatrix} \alpha & 0 \\ 0 & \beta \end{bmatrix} \begin{bmatrix} e^{j\rho_{\alpha,1}} & e^{j\rho_{\alpha,2}} & e^{j\rho_{\alpha,3}} & e^{j\rho_{\alpha,4}} \\ e^{j\rho_{\beta,1}} & e^{j\rho_{\beta,2}} & e^{j\rho_{\beta,3}} & e^{j\rho_{\beta,4}} \end{bmatrix} + \begin{bmatrix} n_{1,1} & n_{1,2} & n_{1,3} & n_{1,4} \\ n_{2,1} & n_{2,2} & n_{2,3} & n_{2,4} \\ n_{3,1} & n_{3,2} & n_{3,3} & n_{3,4} \\ n_{4,1} & n_{4,2} & n_{4,3} & n_{4,4} \end{bmatrix}
$$

412

$$X = B\ \psi\ A^T + W$$

X DATA MATRIX

B — Rx STEERING MATRIX

$\psi$ — TARGET REFLECTION COEFFICIENT MATRIX

$A^T$ — Tx STEERING MATRIX

W — NOISE MATRIX

SVD

RIGHT SINGULAR VECTOR NOISE SUBSPACE → ORTHOGONAL TO DoD STEERING VECTORS

LEFT SINGULAR VECTOR NOISE SUBSPACE → ORTHOGONAL TO DoA STEERING VECTORS

422  424  420

FIG. 4

FIG. 5A

FIG. 5B

FIG. 5C

FIG. 5D

FIG. 6B

M3 ARBITRARY SPARSE MIMO ARRAY SUPER-RES

FIG. 6A

SPARSE MIMO ARRAY BEAMFORMING

FIG. 7B

FIG. 7A

FIG. 7C

FIG. 7D

EP 4 575 573 A1

FIG. 8A

FIG. 8B

FIG. 8C

900

907    Rx SLB$_{max}$ = -2.9564 dB    907

RX ARRAY

ELEVATION [DEG]

2.9564

905

AZIMUTH [deg]

**FIG. 9A**

910

917    Tx SLB$_{max}$ = -2.8203 dB    917

915

2.8203

TX

ELEVATION [DEG]

AZIMUTH [deg]

**FIG. 9B**

2D (Az-El) BROADSIDE-TARGET
BEAMFORMING GAIN PATTERN

920

SLB$_{rms}$ = -11.6654dB, SLB$_{max}$ = -8.8507 dB, num$_{pk}$ = 33

925    927    927

8.8507

VIRTUAL ARRAY

ELEVATION [DEG]

AZIMUTH [deg]

**FIG. 9C**

1000

BEAMFORMER W. TRUTH

1001

1002

20

10

EL [DEG]

0

-10

-20

1005

1005

1004

-60    -40    -20    0    20    40    60

AZ [deg]

1004

0

-50

-10

-15

FIG. 10A

1020

MMM ANGLE SPECTRUM W. TRUTH

1021

1022

20

10

EL [DEG]

0

-10

-20

1025

1025

1025    1025

1024

-60    -40    -20    0    20    40    60

AZ [deg]

1024

0

-50

-10

-15

FIG. 10B

1040

MMM ANGLE SPECTRUM W. SOL

1042

1047  1045

1047

1047

1045 1045

0  1041

-50

-10

-15

EL [DEG]

20

10

-10

-20

1044

-60   -40   -20    0    20    40    60

AZ [deg]

FIG. 10C

1060

MMM SOLUTIONS

1062

1065   1065

1069

1069

1067

1067

o TOP SOL.
o SUPP. SOL.
+ TRUTH

EL [DEG]

20

10

-10

-20

1064

-60   -40   -20    0    20    40    60

AZ [deg]

FIG. 10D

FIG. 11A

FIG. 11B

1140

MMM ANGLE SPECTRUM W. SOL

1141

1142

1147   1145

1145

1145

1145   1147

1147

1145   1147

EL [DEG]

AZ [deg]

1144

0

-50

-10

-15

## FIG. 11C

1160

MMM SOLUTIONS

1162

1169

1167   1167

1165   1165

1165

1167

1169

| ○ | TOP SOL. |
| ○ | SUPP. SOL. |
| + | TRUTH |

EL [DEG]

AZ [deg]

1164

## FIG. 11D

1200

BEAMFORMER W. TRUTH                                    1201

FIG. 12A

MMM ANGLE SPECTRUM W. TRUTH                            1221

1220

FIG. 12B

1240

MMM ANGLE SPECTRUM W. SOL

1241

1242

FIG. 12C

1260

MMM SOLUTIONS

1262

○ TOP SOL.
○ SUPP. SOL.
+ TRUTH

FIG. 12D

1300

BEAMFORMER W. TRUTH

1302

20

10

EL [DEG]

0

-10

-20

-60    -40    -20     0      20     40     60

AZ [deg]

1304

1301

0

-50

-10

-15

1305

1305

## FIG. 13A

1320

MMM ANGLE SPECTRUM W. TRUTH

1322

20

10

EL [DEG]

0

-10

-20

-60    -40    -20     0      20     40     60

AZ [deg]

1324

1321

0

-50

-10

-15

1325    1325

## FIG. 13B

1340

MMM ANGLE SPECTRUM W. SOL

1341

1342

1347

1345

1347

AZ [deg]

1344

FIG. 13C

1360

MMM SOLUTIONS

1362

1369

1365

○ TOP SOL.
○ SUPP. SOL.
+ TRUTH

1367

AZ [deg]

1364

FIG. 13D

Europäisches Patentamt

European Patent Office

Office européen des brevets

# EUROPEAN SEARCH REPORT

**Application Number**

EP 24 21 9538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/214425 A1 (YOFFE ILIA [IL] ET AL) 7 July 2022 (2022-07-07) <br> * figure 1 * <br> * abstract * <br> * paragraphs [0384], [0395], [0401], [0577], [0655] * <br> ----- | 1-15 | INV. <br> G01S13/42 <br> G01S3/14 <br> G01S13/931 |
| A | LI XIAOHONG ET AL: "Joint DOD and DOA Estimation for Bistatic MIMO Radar with Unknown Spatially Colored Noise: A Tensor Completion Approach *", <br> 2019 IEEE INTERNATIONAL CONFERENCE ON SIGNAL, INFORMATION AND DATA PROCESSING (ICSIDP), IEEE, <br> 11 December 2019 (2019-12-11), pages 1-5, XP033813121, <br> DOI: 10.1109/ICSIDP47821.2019.9173000 <br> [retrieved on 2020-08-20] <br> * abstract * <br> * page 2, column 2, line 2 - line 18 * <br> ----- | 1-15 | |
| | | | **TECHNICAL FIELDS SEARCHED (IPC)** <br><br> G01S |

The present search report has been drawn up for all claims

| Place of search | Date of completion of the search | Examiner |
|---|---|---|
| Munich | 5 May 2025 | Alberga, Vito |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                     

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 9538

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | Publication date | Patent family member(s) | Publication date |
|---|---|---|---|
| US 2022214425 A1 | 07-07-2022 | NL 2029890 A | 20-07-2022 |
| | | TW 202225726 A | 01-07-2022 |
| | | US 2022214425 A1 | 07-07-2022 |
| | | US 2024385291 A1 | 21-11-2024 |
| | | WO 2022139843 A1 | 30-06-2022 |

EPO FORM P0459

For more details about this annex : see Official Journal of the European Patent Office, No. 12/82